# EUROPEAN PATENT SPECIFICATION

(11) **EP 2 822 222 B1**
(45) Date of publication and mention of the grant of the patent: **17.02.2016**
(21) Application number: 14175791.4
(22) Date of filing: 04.07.2014
(51) Int. Cl.: H04L 12/24

(54) **Communication system, protocol processing computer and communication method**
Kommunikationssystem, Protokollverarbeitungscomputer und Kommunikationsverfahren
Système de communication, ordinateur de traitement de protocole et procédé de communication

(30) Priority: 05.07.2013 JP 2013141860
(43) Date of publication of application: 07.01.2015
(73) Proprietor: Hitachi, Ltd., Tokyo 100-8280 (JP)
(72) Inventor: Shibata, Takeshi, Tokyo, 100-8280 (JP); Takase, Masayuki, Tokyo, 100-8280 (JP); Kimura, Masahiro, Tokyo, 100-8280 (JP)
(74) Representative: MERH-IP Matias Erny Reichl Hoffmann Patentanwälte PartG mbB

(56) References cited:
- WO-A2-2006/018716
- GB-A- 2 357 680
- US-A1- 2011 161 405
- US-B1- 7 606 241

## Description

### CLAIM OF PRIORITY

The present application claims priority from Japanese patent application JP 2013-141860 filed on July 5, 2013.

### BACKGROUND OF THE INVENTION

This invention relates to a communication system for coupling a first communication network including data transfer apparatus as components and a second communication network including routers as components to each other.

A router and a transport apparatus are known as communication apparatus constructing an IT network.

The router is a communication apparatus for controlling a communication network in an autonomous distributed manner between the communication apparatus by using a protocol on the Internet Protocol (IP) layer such as the Open Shortest Path First (OSPF) and the Border Gateway Protocol (BGP) specified by the Internet Engineering Task Force (IETF) (for example, refer to J. Moy, "IETF RFC 2328 OSPF Version 2", [online], April 1998, Internet and Y. Rekhter, et al., "IETF RFC 4271 A Border Gateway Protocol 4 (BGP-4)", [online], January 2006, Internet).

The transport apparatus is a communication apparatus which includes a plurality of data transfer apparatus for transferring data and network control servers, and controls a communication network by the network control servers for controlling the plurality of data transfer apparatus in a concentrated manner.

The United States Patent No. 7,606,241 B1 discloses a multi-chassis router The multi-chassis router automatically distributes, processes and responds to administrator commands as a single unit, minimizing the time required to administer the multi-chassis router.

### SUMMARY OF THE INVENTION

A protocol processing server carries out processing relating to the protocol on the IP layer used by the routers to control the communication network, and notifies the network control server of an execution result, thereby coupling the communication network constructed by the autonomous distributed control by the routers and the communication network constructed by the concentrated control by the transport apparatus to each other.

When the communication network constructed by the routers and the communication network constructed by the transport apparatus are coupled to each other by using the protocol processing server, the protocol processing server carries out, in a concentrated manner, the processing for the protocol on the IP layer transmitted by the plurality of routers.

As a scale of the communication network constructed by the data transfer apparatus increases and the number of routers coupled to the transport apparatus increases, the number of protocol packets requiring the protocol processing on the IP layer communicated among the routers increases, resulting in an increase in processing load imposed on the protocol processing server.

It is an object of this invention to provide a communication system capable of decreasing a processing load imposed on a protocol processing server, and adapting to an increase in scale of a communication network constructed by data transfer apparatus.

According to an aspect of the present invention, there is provided a communication system for coupling a first communication network including a data transfer apparatus as a component and a second communication network including a router as a component to each other, the communication system comprising: the data transfer apparatus; the router; a plurality of protocol processing computers; and a network control computer, the first communication network being constructed by centralized control by the network control computer, the second communication network being constructed by autonomous distributed control by using a protocol on an IP layer of the router, the router being configured to transmit protocol data requiring protocol processing on the IP layer to the data transfer apparatus, the data transfer apparatus being configured to transfer the protocol data transmitted from the router to any one of the plurality of protocol processing computers, the one of the plurality of protocol processing computers being configured to: carry out, when receiving the protocol data, the protocol processing on the IP layer for the received protocol data; and hold identification information on an interface included in the data transfer apparatus for transferring the protocol data to the one of the plurality of protocol processing computers, thereby managing the data transfer apparatus for transferring the protocol data to the one of the plurality of protocol processing computers.

A brief description is now given of effects provided by the exemplary embodiment of this invention disclosed in this application. This invention enables to provide the communication system capable of decreasing a processing load imposed on a protocol processing server, and adapting to an increase in scale of a communication network constructed by data transfer apparatus.

Other objects, configurations, and effects than those described above are revealed in the following description of an embodiment.

### BRIEF DESCRIPTION OF THE DRAWINGS

The present invention can be appreciated by the description which follows in conjunction with the following figures, wherein:
FIG. 1 is an explanatory diagram of a communication system according to a first embodiment of this invention;
FIG. 2 is an explanatory diagram of a first communication network according to the first embodiment of this invention;
FIG. 3 is a block diagram of a router according to the first embodiment of this invention;
FIG. 4 is a block diagram of a data transfer apparatus according to the first embodiment of this invention;
FIG. 5 is an explanatory diagram of a protocol processing server according to the first embodiment of this invention;
FIG. 6 is an explanatory diagram of a virtual interface management table according to the first embodiment of this invention;
FIG. 7 is a sequence diagram of neighbor advertisement processing and path information notification processing according to the first embodiment of this invention;
FIG. 8 is a flowchart of the neighbor advertisement processing carried out by a virtual internal router according to the first embodiment of this invention;
FIG. 9 is a flowchart illustrating the path information notification processing according to the first embodiment of this invention;
FIG. 10 is a diagram illustrating an example of the neighbor advertisement and the path information notification when routing protocol used in the first embodiment of this invention is the OSPF;
FIG. 11 is a diagram illustrating an example of the neighbor advertisement and the path information notification when the routing protocol used in the first embodiment of this invention is the BGP;
FIG. 12 is an explanatory diagram of the protocol processing server according to a second embodiment of this invention;
FIG. 13 is an explanatory diagram of the virtual interface management table according to the second embodiment of this invention;
FIG. 14 is an explanatory diagram of the first communication network according to a third embodiment of this invention, and,
FIG. 15 is an explanatory diagram of the virtual interface management table according to the third embodiment of this invention.

### DETAILED DESCRIPTION OF THE PREFERRED EMBODIMENTS

A detailed description is now given of embodiments of this invention referring to the drawings. Substantially the same components are denoted by the same reference numerals, and a description thereof is therefore omitted.

### [First Embodiment]

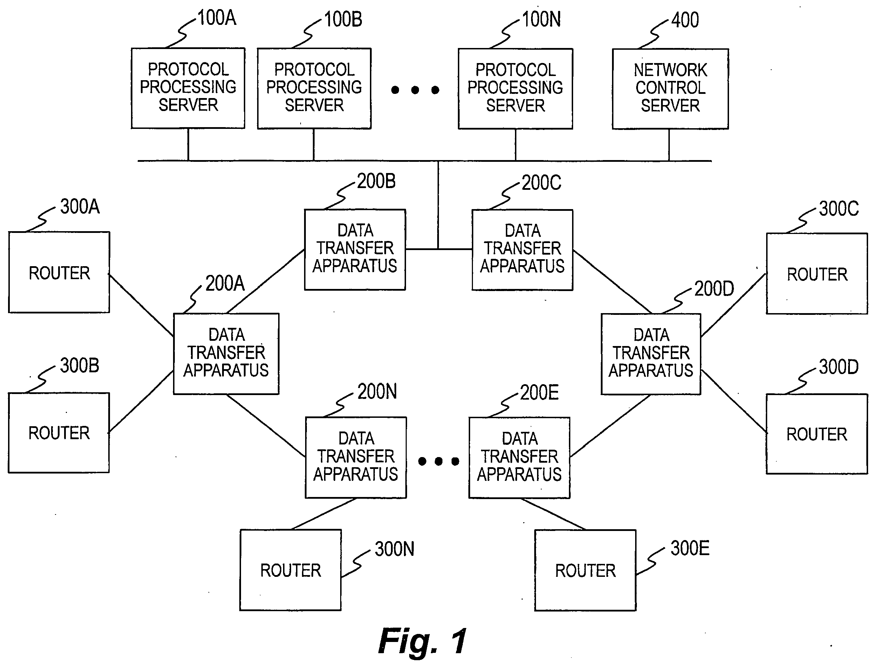

Referring to FIGS. 1 to 9, a description is now given of a first embodiment of this invention.

FIG. 1 is an explanatory diagram of a communication system according to the first embodiment of this invention.

The communication system according to this embodiment includes protocol processing servers (protocol processing computers) 100A to 100*N*, data transfer apparatus 200A to 200*N*, routers 300A to 300*N*, and a network control server (network control computer) 400. It should be noted that, hereinafter, the protocol processing servers 100A to 100*N* are collectively referred to as protocol processing server 100; the data transfer apparatus 200A to 200*N*, data transfer apparatus 200; and routers 300A to 300*N*, router 300. The number of the network control server 400 is not limited to one, and the communication system may include a plurality of network control servers 400.

The network control server 400 constructs a first communication network by controlling the data transfer apparatus 200 in a centralized manner. Moreover, autonomous distributed control by the routers 300 constructs a second communication network including the routers 300 as components. For example, the first communication network is a communication network using the MPLS-TP, and the second communication network is a communication network using the IP or the IP/MPLS.

The routers 300 are coupled to the data transfer apparatus 200, and transmit data packets or protocol packets. The data packet is a packet including data transmitted by a user terminal (not shown), and is transmitted to a user terminal (not shown) coupled to an opposite router 300. The protocol packet is a packet for control requiring protocol processing on the IP layer, and is transmitted to the data transfer apparatus 200. The protocol packet includes a neighbor advertisement packet for notifying neighbor data transfer apparatus 200 of identification information on the IP address and the like of the router 300, and a path information notification packet for notifying path information on the router 300.

The data transfer apparatus 200 is coupled to other data transfer apparatus 200 and the protocol processing servers 100. The data transfer apparatus 200A, 200D, 200E, and 200*N* illustrated in FIG. 1 are coupled to the routers 300.

The data transfer apparatus 200 transfers the data packet or the protocol packet transmitted from the router 300. The data transfer apparatus 200 determines whether the received packet is a data packet or a protocol packet. Then, when the received packet is a protocol packet, the data transfer apparatus 200 transfers the received packet to the protocol processing server 100 so as to control the protocol processing server 100 to carry out the protocol processing on the IP layer, and when the received packet is a data packet, the data transfer apparatus 200 transfers the received packet to a next data transfer apparatus 200.

When the protocol processing server 100 receives a protocol packet transferred from the data transfer apparatus 200, the protocol processing server 100 carries out the protocol processing on the IP layer of the protocol packet.

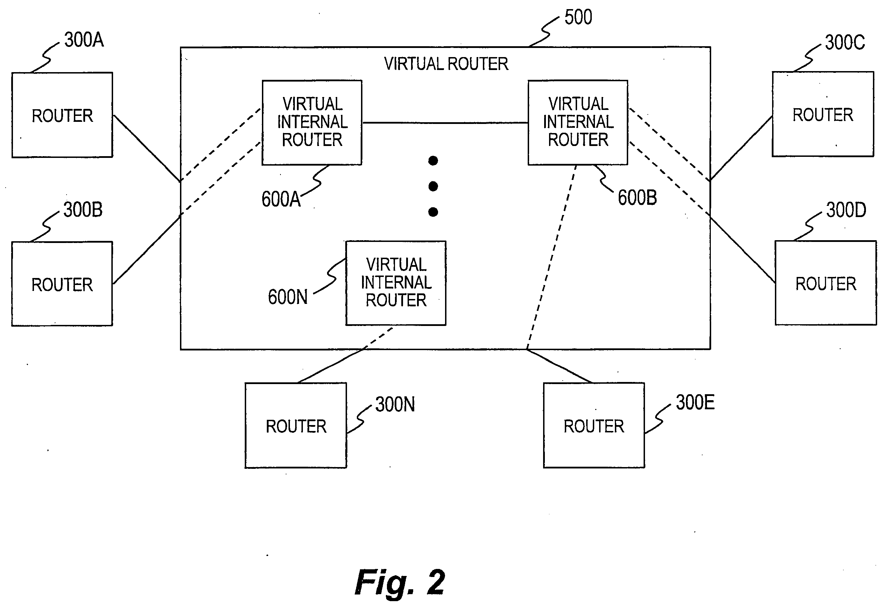

FIG. 2 is an explanatory diagram of the first communication network according to the first embodiment of this invention.

The router 300 recognizes the first communication network including the data transfer apparatus 200 as components as a single virtual router (virtual router 500). The virtual router 500 includes the protocol processing servers 100, the data transfer apparatus 200, and the network control server 400.

The virtual router 500 includes virtual internal routers 600A to 600*N* (hereinafter collectively referred to as virtual internal router 600). The virtual internal router 600 includes the data transfer apparatus 200 and the protocol processing server 100. For example, the virtual internal router 600A illustrated in FIG. 2 includes the protocol processing server 100A and the data transfer apparatus 200A illustrated in FIG. 1. In this case, the protocol processing server 100A carries out the protocol processing on the IP layer for a protocol packet transferred by the data transfer apparatus 200A.

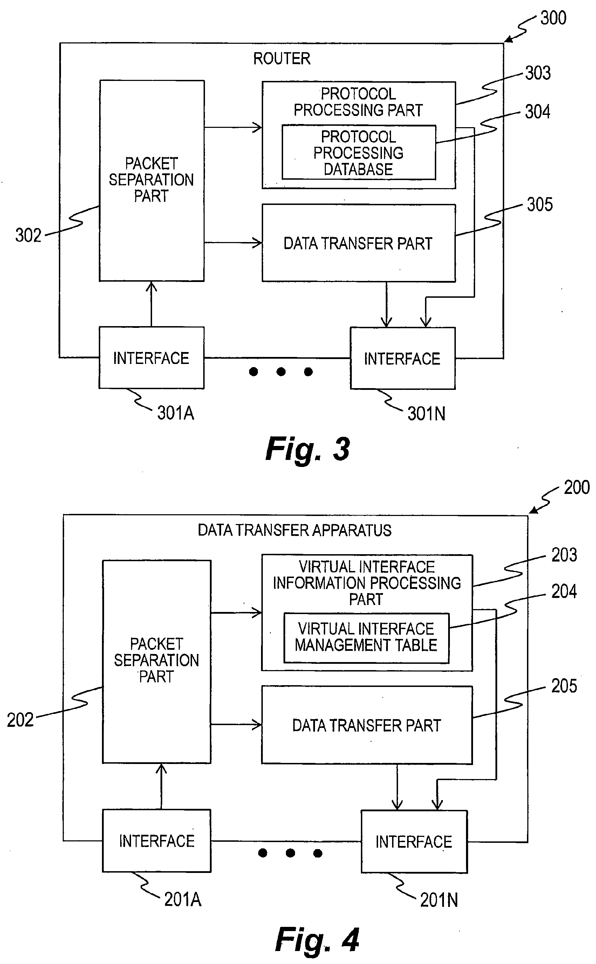

FIG. 3 is a block diagram of the router 300 according to the first embodiment of this invention.

The router 300 includes a plurality of interfaces 301A to 301*N* (hereinafter collectively referred to as interface 301), a packet separation part 302, a protocol processing part 303, and a data transfer part 305.

The interface 301 is coupled to another router 300, a user terminal (not shown), or the data transfer apparatus 200.

The packet separation part 302 determines whether a packet input to the interface 301 coupled to another router 300 or the user terminal (not shown) is a protocol packet or a data packet. When the packet is the protocol packet, the packet separation part 302 outputs the packet to the protocol processing part 303, and when the packet is the data packet, outputs the packet to the data transfer part 305.

The protocol processing part 303 includes a protocol processing database 304 to which data required for the protocol processing is registered. For example, identification information such as IP addresses of routers 300 or virtual routers 500 neighboring to the router 300 is registered to the protocol processing database 304. The protocol processing part 303 refers to the protocol processing database 304, and carries out the protocol processing on the IP layer for the protocol packet output from the packet separation part 302.

Then, the protocol processing part 303 determines whether to terminate or transfer the protocol packet based on a destination of the protocol packet. The protocol processing part 303 terminates the protocol packet when the protocol packet is to be terminated, and transmits the protocol packet from the interface 301 corresponding to the address of the protocol packet when the protocol packet is to be transferred.

The data transfer part 305 identifies an interface 301 corresponding to the destination of the data packet output from the packet separation part 302, and transmits the data packet from the identified interface 301.

FIG. 4 is a block diagram of the data transfer apparatus 200 according to the first embodiment of this invention.

The data transfer apparatus 200 includes interfaces 201A to 201*N* (hereinafter collectively referred to as interface 201), a packet separation part 202, a virtual interface information processing part 203, and a data transfer part 205.

The interface 201 is coupled to the router 300, another data transfer apparatus 200, the protocol processing server 100, or the network control server 400.

The packet separation part 202 determines whether a packet input to the interface 301 is a protocol packet or a data packet. When the input packet is a protocol packet, the packet separation part 202 outputs the input packet to the virtual interface information processing part 203, and when the input packet is a data packet, outputs the input packet to the data transfer part 205.

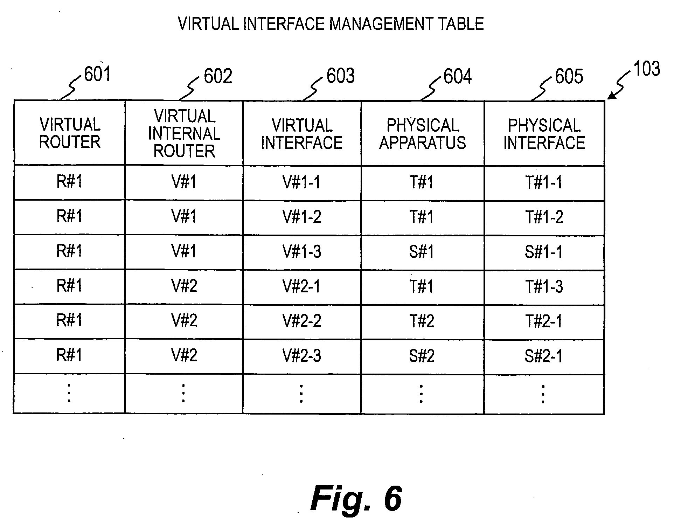

The virtual interface information processing part 203 includes a virtual interface management table 204 used to transfer the protocol packet to the protocol processing server 100. Each of relationships between a virtual interface 104 included in a virtual internal router 600 and an interface 201 serving as a physical interface of the virtual interface 104 is registered to the virtual interface management table 204. The virtual interface 104 is a virtual interface of the virtual internal router 600 operating on the protocol processing server 100. It should be noted that, referring to FIG. 6, a detailed description is given of the virtual interface management table 204.

The virtual interface information processing part 203 refers to the virtual interface management table 204 to identify identification information on a virtual interface 104 serving as a transfer destination of the input protocol packet, thereby identifying a protocol processing server 100 serving as a transfer destination of the input protocol packet. Then, the virtual interface information processing part 203 transmits the protocol packet from the interface 201 corresponding to the protocol processing server 100 serving as the identified transfer destination.

The data transfer part 205 identifies the interface 201 corresponding to the destination of the data packet output from the packet separation part 202, and transmits the data packet from the identified interface 201.

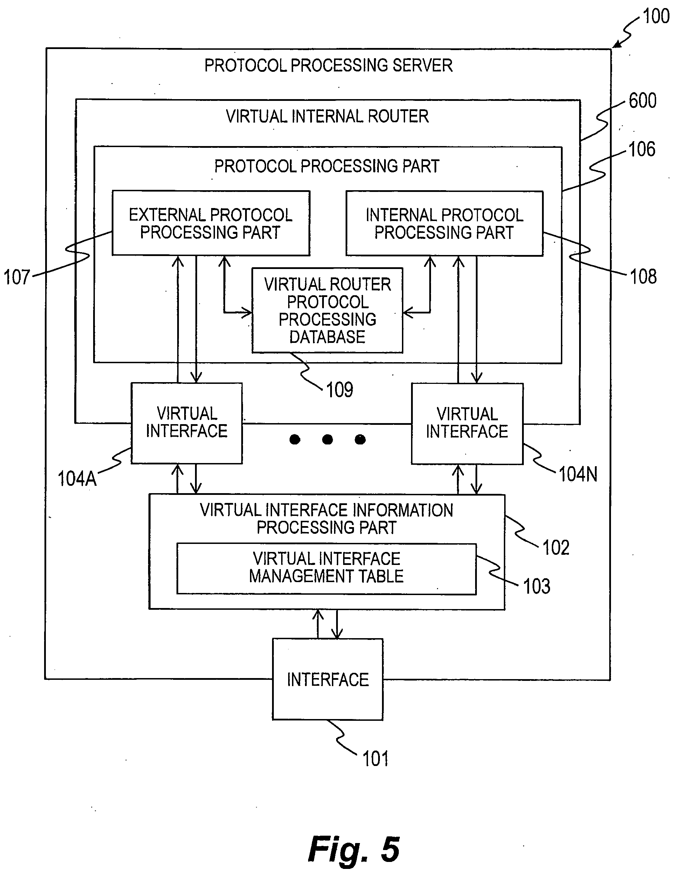

FIG. 5 is an explanatory diagram of the protocol processing server 100 according to the first embodiment of this invention.

The protocol processing server 100 includes an interface 101, a virtual interface information processing part 102, and a virtual internal router 600.

The interface 101 is coupled to the data transfer apparatus 200.

The virtual interface information processing part 102 includes a virtual interface management table 103 for managing the data transfer apparatus 200 for transferring a protocol packet for which the protocol processing server 100 carries out the protocol processing on the IP layer. It should be noted that, referring to FIG. 6, a detailed description is given of the virtual interface management table 103.

The virtual interface information processing part 102 identifies a virtual interface 104 serving as the destination of the protocol packet input to the interface 101, and outputs the protocol packet to the identified virtual interface 104.

The virtual internal router 600 includes virtual interfaces 104A to 104N (hereinafter collectively referred to as virtual interface 104), an external protocol processing part 107, an internal protocol processing part 108, and a virtual router protocol processing database 109.

The virtual interface 104 is a virtual interface of the virtual internal router 600, and is coupled to the external protocol processing part 107 or the internal protocol processing part 108 and the virtual interface information processing part 102.

The external protocol processing part 107 carries out the protocol processing on the IP layer for a protocol packet transmitted/received via an external coupling of the virtual router 500, namely, between the virtual router 500 and the router 300 or between the virtual routers 500. The internal protocol processing part 108 carries out the protocol processing on the IP layer for a protocol packet transmitted/received between the virtual internal routers 600 in the virtual router 500. Data required by the external protocol processing part 107 and the internal protocol processing part 108 to carry out the protocol processing is registered to the virtual router protocol processing database 109.

First, a description is given of processing carried out by the external protocol processing part 107 when the virtual router 500 receives the protocol packet transmitted from the router 300.

The external protocol processing part 107 refers to the virtual router protocol processing database 109 to carry out the protocol processing on the IP layer for protocol data input from the virtual interface 104. Then, the external protocol processing part 107 determines whether to terminate or transfer the protocol packet based on a destination of the protocol packet. The external protocol processing part 107 terminates the protocol packet when the protocol packet is to be terminated, and transmits the protocol packet from a virtual interface 104 corresponding to the destination of the protocol packet when the protocol packet is to be transferred.

A description is now given of the processing carried out by the virtual router 500 to transmit a protocol packet to the router 300.

The external protocol processing part 107 refers to the virtual router protocol processing database 109, thereby carrying out the protocol processing on the IP layer for a protocol packet to be transmitted to the router 300. The external protocol processing part 107 transmits the protocol packet via a virtual interface 104 corresponding to a destination of the protocol packet.

A description is now given of processing carried out by the internal protocol processing part 108 when the virtual internal router 600 receives the protocol packet transmitted from another virtual internal router 600.

The internal protocol processing part 108 refers to the virtual router protocol processing database 109 to carry out the protocol processing on the IP layer for protocol data input from the virtual interface 104. Then, the internal protocol processing part 108 determines whether to terminate or transfer the protocol packet based on a destination of the protocol packet. The internal protocol processing part 108 terminates the protocol packet when the protocol packet is to be terminated, and transmits the protocol packet from a virtual interface 104 corresponding to the destination of the protocol packet when the protocol packet is to be transferred.

A description is now given of the processing carried out by the virtual internal router 600 to transmit a protocol packet to another virtual internal router 600.

The internal protocol processing part 108 refers to the virtual router protocol processing database 109, thereby carrying out the protocol processing on the IP layer for a protocol packet to be transmitted to another virtual internal router 600. The internal protocol processing part 108 transmits the protocol packet via a virtual interface 104 corresponding to a destination of the protocol packet.

FIG. 6 is an explanatory diagram of the virtual interface management table 103 according to the first embodiment of this invention.

The virtual interface management table 103 includes virtual routers 601, virtual internal routers 602, virtual interfaces 603, physical apparatus 604, and physical interfaces 605.

Identification information on the virtual router 500 to which a virtual internal router 600 belongs is registered to the virtual router 601. Identification information on the virtual internal router 600 is registered to the virtual internal router 602. Identification information on a virtual interface 104 included in the virtual internal router 600 is registered to the virtual interface 603.

Identification information on an apparatus including a physical interface functioning as the virtual interface 104 is registered to the physical apparatus 604. Specifically, identification information (such as "T#1") on a data transfer apparatus 200 or identification information (such as "S#1") on a protocol processing server 100 is registered to the physical apparatus 604. Identification information on the physical interface associated with the virtual interface 104 is registered to the physical interface 605.

The protocol processing server 100 includes the virtual interface management table 103, and thus can group and manage data transfer apparatus 200, which transfer protocol packets for which the protocol processing server 100 itself carries out the protocol processing on the IP layer.

Moreover, the virtual interface management table 204 included in the data transfer apparatus 200 includes records in each of which an identifier of the data transfer apparatus 200 is registered to the physical apparatus 604 of the virtual interface management table 103 shown in FIG. 6.

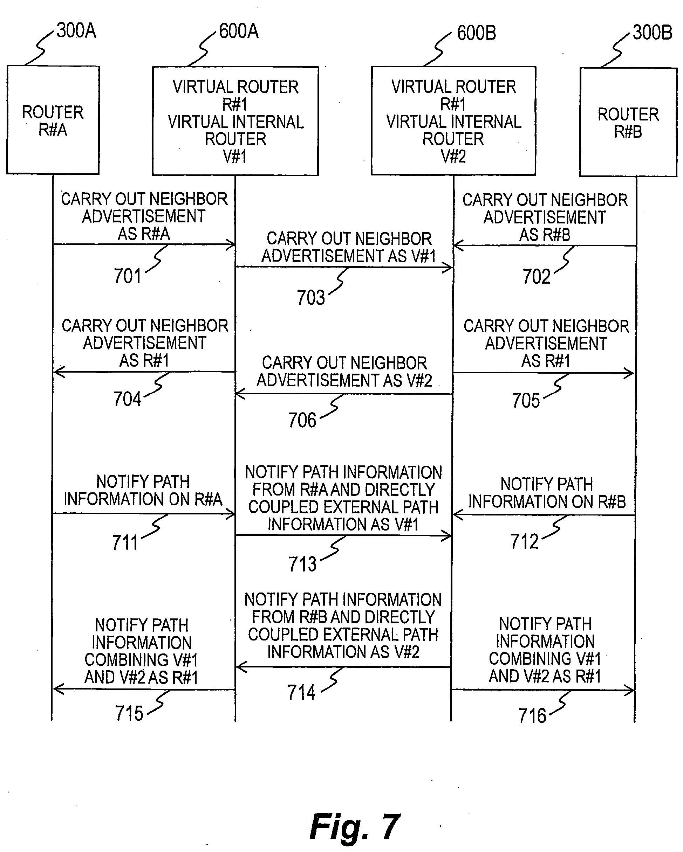

FIG. 7 is a sequence diagram of neighbor advertisement processing and path information notification processing according to the first embodiment of this invention.

First, a description is given of the neighbor advertisement processing. The neighbor advertisement processing is processing in which the router 300 or the virtual internal router 600 transmits a neighbor advertisement packet for notifying its own existence to other neighboring routers 300 or virtual internal routers 600, and is carried out by the router 300 or the virtual internal router 600 at a predetermined timing.

When the virtual internal router 600 carries out the neighbor advertisement processing, the virtual internal router 600 transmits a neighbor advertisement packet from virtual interfaces 104 of the virtual internal router 600. In this case, the protocol processing part 106 of the virtual internal router 600 refers to the virtual interface management table 103 to determine whether a physical interface of each of the virtual interfaces 104 is an interface 201 of a data transfer apparatus 200. When the physical interface of the virtual interface 104 is an interface 201 of a data transfer apparatus 200, the protocol processing part 106 determines that the coupling is an external coupling, and transmits, from the virtual interface 104, the neighbor advertisement packet including the identification information on the virtual router 500 to which the virtual internal router 600 belongs. Alternatively, when the physical interface of the virtual interface 104 is not an interface 201 of a data transfer apparatus 200 but is an interface 101 of the protocol processing server 100, the protocol processing part 106 determines that the coupling is an internal coupling, and transmits the neighbor advertisement packet including the identification information on the virtual internal router 600 from the virtual interface 104.

In FIG. 7, first, the router 300A transmits a neighbor advertisement packet including its own identification information (R#A) to the virtual router 500 (Step 701). Specifically, the router 300A transmits the neighbor advertisement packet to the data transfer apparatus 200A neighboring in FIG. 1. The data transfer apparatus 200A refers to the virtual interface management table 204 to identify a virtual internal router 600 (R#1) and a virtual interface 104 (V#1-1) corresponding to an interface 201 which receives the neighbor advertisement packet, and considers the identified virtual interface 104 (V#1-1) as a destination, thereby transmitting the neighbor advertisement packet to the virtual internal router 600A (R#1). As a result, the neighbor advertisement packet is transmitted from the router 300A to the virtual internal router 600A.

Moreover, a router 300B transmits a neighbor advertisement packet including its own identification information (R#B) to the virtual router 500 (Step 702). Details of the processing of Step 702 are the same as those of the processing of Step 701, and a description thereof is therefore omitted.

The virtual internal router 600A transmits the neighbor advertisement packet from a virtual interface 104 (V#1-3) (Step 703). Specifically, the protocol processing part 106 refers to the virtual interface management table 103 to determine that the physical interface of the virtual interface 104 (V#1-3) is an interface (S#1-1) of the protocol processing server 100 (S#1) and the coupling is thus an internal coupling. Therefore, the protocol processing part 106 transmits, from the virtual interface 104 (V#1-3), the neighbor advertisement packet including the identification information on the virtual internal router 600A (V#1). As a result, the neighbor advertisement packet is transmitted from the virtual internal router 600A to the virtual internal router 600B.

The virtual internal router 600A transmits the neighbor advertisement packet from a virtual interface 104 (V#1-1) to the router 300A (Step 704). Specifically, the protocol processing part 106 refers to the virtual interface management table 103 to determine that the physical interface of the virtual interface 104 (V#1-1) is an interface 201 (T#1-1) of the data transfer apparatus 200A and the coupling is thus an external coupling. Therefore, the protocol processing part 106 transmits the neighbor advertisement packet including the identification information (R#1) of the virtual router 500 to which the virtual internal router 600A belongs to the interface 201 (T#1-1) of the data transfer apparatus 200A. When the data transfer apparatus 200A receives the neighbor advertisement packet from the protocol processing server 100, the data transfer apparatus 200A transmits the received neighbor advertisement packet to the router 300A. As a result, the neighbor advertisement packet is transmitted from the virtual router 500 to the router 300A.

The virtual internal router 600B transmits a neighbor advertisement packet including the identification information (R#1) on the virtual router from the virtual interface 104 (V#2-1) to the router 300B (Step 705). Details of the processing of Step 705 are the same as those of the processing of Step 704, and a description thereof is therefore omitted.

The virtual internal router 600B transmits a neighbor advertisement packet including the identification information (V#2) of the virtual internal router 600B to the virtual internal router 600A from the virtual interface 104 (V#2-3) (Step 706). Details of the processing of Step 706 are the same as those of the processing of Step 703, and a description thereof is therefore omitted.

In the communication system according to this embodiment, the plurality of protocol processing servers 100 for carrying out the protocol processing on the IP layer exist, and thus the protocol processing is carried out in the distributed manner on the plurality of protocol processing servers 100. Therefore, compared with a case where only one protocol processing server 100 exists in the communication system and the single protocol processing server 100 carries out the protocol processing, the processing load on each of the protocol processing server 100 is reduced.

When the plurality of protocol processing servers 100 exist in this way, the protocol processing servers 100 need to recognize one another as different from one another. However, the routers 300 recognize the first communication network as the virtual router 500 as described above with reference to FIG. 2, and do not thus need to recognize the protocol processing servers 100 as different from one another.

Therefore, in this embodiment, the virtual internal router 600 transmits a neighbor advertisement packet including the identification information on itself (virtual internal router 600) from the virtual interface 104 having the interface 101 of the protocol processing server 100 as the physical interface, and transmits a neighbor advertisement packet including identification information on the virtual router 500 to which the virtual internal router 600 itself belongs from the virtual interface 104 having the interface 201 of the data transfer apparatus 200 as the physical interface.

As a result, even in the communication system including the routers 300 recognizing the plurality of protocol processing servers 100 and the first communication network as the virtual router 500, the virtual internal router 600 operating on the protocol processing server 100 can notify a router 300 of the identification information on the virtual router 500, and can notify another virtual internal router 600 of the identification information on itself (virtual internal router 600). As a result, the router 300 can recognize the first communication network as the virtual router 500, and the virtual internal router 600 can recognize another virtual internal router 600 as a different virtual internal router 600.

A description is now given of the path information notification processing. The path information notification processing is processing in which the router 300 or the virtual internal router 600 transmits a path information notification packet to other neighboring routers 300 or virtual internal routers 600, and is carried out by the router 300 or the virtual internal router 600 at a predetermined timing.

On this occasion, the route information notification packet includes information representing a neighbor relationship held by the router 300 or the virtual internal router 600 as the path information when a used routing protocol is the Open Shortest Path First (OSPF), and includes information representing a path held by the router 300 or the virtual internal router 600 as the path information when a used routing protocol is the Border Gateway Protocol (BGP).

When the virtual internal router 600 receives a path information notification packet from the router 300, the virtual internal router 600 associates the path information included in the received path information notification packet with the identification information on the router 300, which is a transmission source of the path information notification packet, and stores the path information in the virtual router protocol processing database 109. Moreover, when the virtual internal router 600 receives a path information notification packet from another virtual internal router 600, the virtual internal router 600 associates the path information included in the received path information notification packet with the identification information on the virtual internal router 600, which is a transmission source of the path information notification packet, and stores the path information in the virtual router protocol processing database 109.

The virtual internal router 600 transmits the path information notification packet from a virtual interface 104. Specifically, the virtual internal router 600 transmits path information combining path information (in FIG. 7, represented as direct external path information) on external networks to which the virtual internal router 600 itself directly couples, path information directly received by the virtual internal router 600 itself from routers 300, and path information received from virtual internal routers 600 other than a virtual internal router 600, which is a transmission destination of the path information notification packet, from a virtual interface 104 (virtual interface 104 for an internal coupling) having the interface 101 of the protocol processing server 100 as the physical interface to another virtual internal router 600. Moreover, the virtual internal router 600 transmits the path information combining the path information on the external networks to which the virtual internal router 600 itself directly couples, the path information directly received by itself from the routers 300, and path information received from other virtual internal routers 600 from a virtual interface 104 (a virtual interface 104 for an external coupling) having an interface 201 of a data transfer apparatus 200 as the physical interface to the router 300. It should be noted that the virtual internal router 600 stores, in advance, the path information on the external networks to which the virtual internal router 600 itself directly couples.

In other words, in the path information notification processing according to this embodiment, only the path information on the external couplings of the virtual router 500, namely, the path information on the couplings between the virtual router 500 and routers 300 and the couplings between the virtual routers 500 is exchanged between the virtual internal routers 600. The virtual internal router 600 stores path information on internal couplings to other virtual internal routers 600, but the path information on the internal couplings is not exchanged. The coupling between the virtual internal routers 600 is a coupling between the protocol processing servers 100, and the path information on the coupling does not thus need to be exchanged. Therefore, in this embodiment, the unnecessary path information is not exchanged between the virtual internal routers 600, and path information to be processed and network traffic can thus be reduced.

In FIG. 7, first, the router 300A transmits a path information notification packet including path information held by the router 300A itself and its own identification information (R#A) as a transmission source to the virtual router 500 (Step 711). Processing until the path information notification packet reaches the protocol processing server 100 is the same as the processing of Step 701, and a description thereof is therefore omitted.

When the virtual internal router 600A receives the path information notification packet transmitted by the router 300A in the processing of Step 701, the virtual internal router 600A associates the path information included in the received path information notification packet and the identification information (R#A) on the router 300A, which is the transmission source, included in the path information notification packet with each other, and stores the path information and the identification information associated with each other in the virtual router protocol processing database 109.

Moreover, the router 300B transmits a path information notification packet including path information held by the router 300B itself and its own identification information (R#B) as a transmission source to the virtual router 500 (Step 712). Details of the processing of Step 712 are the same as those of the processing of Step 711, and a description thereof is therefore omitted.

Then, the virtual internal router 600A transmits the path information notification packet from the virtual interface 104 (V#1-3) to the virtual internal router 600B (Step 713). As in the description that has been given of the processing of Step 703, the protocol processing part 106 determines that the physical interface of the virtual interface 104 (V#1-3) is the interface 101 (S#1-1) of the protocol processing server 100 (S#1), and the coupling is thus an internal coupling. Therefore, the protocol processing part 106 refers to the virtual router protocol processing database 109, thereby acquiring the path information on the external couplings of the virtual router 500. On this occasion, it is assumed that the path information transmitted by the router 300A in the processing of Step 711 and the path information on the external networks to which the virtual internal router 600A itself directly couples are acquired. Then, the virtual internal router 600A transmits the acquired path information on the external couplings of the virtual router 500 including the identification information (V#1) on the virtual internal router 600A as the transmission source to the virtual internal router 600B (V#2) of the protocol processing server 100 (S#2). As a result, the path information notification packet is transmitted from the virtual internal router 600A to the virtual internal router 600B.

When the virtual internal router 600B receives the path information notification packet transmitted by the virtual internal router 600A in the processing of Step 713, the virtual internal router 600B associates the path information (the path information held by the router 300A and the path information on the external networks to which the virtual internal router 600A directly couples) included in the received path information notification packet and the identification information (V#1) on the virtual internal router 600A of the transmission source included in the path information notification packet with each other, and stores the path information and the identification information associated with each other in the virtual router protocol processing database 109.

The virtual internal router 600B transmits the path information notification packet from the virtual interface 104 (V#2-3) to the virtual internal router 600A (Step 714). The virtual interface 104 (V#2-3) is internally coupled, and the virtual internal router 600B thus transmits the path information transmitted by the router 300B in the processing of Step 712 and the path information on the external networks to which the virtual internal router 600B itself directly couples including the identification information (V#2) on the virtual internal router 600B as the transmission source to the virtual internal router 600A of the protocol processing server 100 (S#1).

When the virtual internal router 600A receives the path information notification packet transmitted by the virtual internal router 600B in the processing of Step 714, the virtual internal router 600A associates the path information (the path information held by the router 300B and the path information on the external networks to which the virtual internal router 600B directly couples) included in the received path information notification packet and the identification information (V#2) on the virtual internal router 600B of the transmission source included in the path information notification packet with each other, and stores the path information and the identification information associated with each other in the virtual router protocol processing database 109.

Moreover, the virtual internal router 600A transmits the path information notification packet from the virtual interface 104 (V#1-1) to the router 300A (Step 715). As in the description that has been given of the processing of Step 704, the virtual interface 104 (V#1-1) is externally coupled, and the protocol processing part 106 thus refers to the virtual router protocol processing database 109, thereby acquiring the path information on the external couplings of the virtual router 500. On this occasion, it is assumed that the protocol processing part 106 acquires the path information on the external networks to which the virtual internal router 600A itself directly couples and the path information (the path information transmitted by the router 300B and the path information on the external networks to which the virtual internal router 600B directly couples) transmitted by the virtual internal router 600B in the processing of Step 714. Then, the virtual internal router 600A transmits the acquired path information on the external couplings of the virtual router 500 including the identification information (R#1) on the virtual router 500 as the transmission source via the data transfer apparatus 200A to the router 300A. As a result, the path information notification packet is transmitted from the virtual router 500 to the router 300A. A reason that not the identification information on the virtual internal router 600A but the identification information on the virtual router 500 is set as the identification information on the transmission source is that the first communication network is recognized by the router 300 not as the virtual internal router 600 but as the virtual router 500.

The virtual internal router 600B transmits the path information notification packet from the virtual interface 104 (V#2-1) to the router 300B (Step 716). In the processing of Step 716, the path information on the external networks to which the virtual internal router 600B itself directly couples and the path information (the path information transmitted by the router 300A and the path information on the external networks to which the virtual internal router 600A directly couples) transmitted by the virtual internal router 600A in the processing of Step 713 including the identification information (R#1) on the virtual router 500 as the transmission source are transmitted to the router 300B. Details of the processing of Step 716 are the same as those of the processing of Step 715, and a description thereof is therefore omitted.

As described above, the path information notification processing according to this embodiment eliminates the exchange of the information on a path between virtual internal routers 600 by the virtual internal routers 600, thereby eliminating the exchange of the unnecessary path information. As a result, the path information to be processed and the network traffic can be reduced.

Moreover, the router 300A opposite to the router 300B needs to store the path information held by the router 300B in order to communicate to/from the networks coupled to the router 300B, but, in the path information notification processing according to this embodiment, the virtual internal router 600A transmits path information combining the path information on the external networks to which the virtual internal router 600A itself directly couples and the path information (path information on the router 300B) transmitted by the virtual internal router 600B. Thus, the router 300A can store the path information on the opposite router 300B.

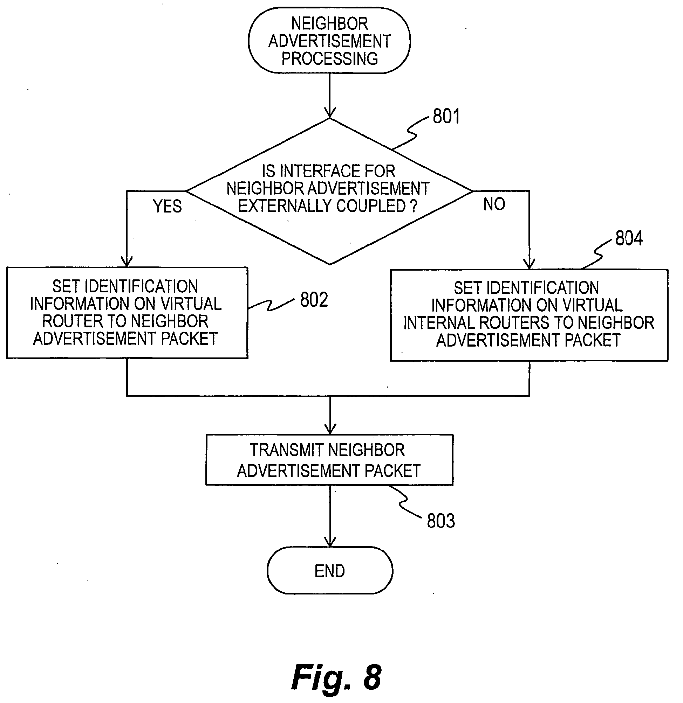

FIG. 8 is a flowchart of neighbor advertisement processing carried out by the virtual internal router 600 according to the first embodiment of this invention.

The neighbor advertisement processing is carried out repeatedly by the virtual internal router 600 at a predetermined timing.

First, the virtual internal router 600 determines whether the virtual interface 104 (hereinafter referred to as virtual interface 104 subject to processing) from which the neighbor advertisement packet is to be transmitted is externally coupled or not (Step 801). Specifically, the virtual internal router 600 refers to the virtual interface management table 103 to acquire such a record that the identification information registered to the virtual internal router 602 is the own identification information, and the identification information registered to the virtual interface 603 is the identification information on the virtual interface 104 subject to processing. Then, when the identification information on a data transfer apparatus 200 is registered to the physical apparatus 604 of the acquired record, the virtual internal router 600 determines that the virtual interface 104 subject to processing is externally coupled, and when the identification information on a protocol processing server 100 is registered to the physical apparatus 604 of the acquired record, the virtual internal router 600 determines that the virtual interface 104 subject to processing is internally coupled.

When it is determined that the virtual interface 104 subject to processing is externally coupled in the processing of Step 801, the virtual internal router 600 sets the identification information on the virtual router 500 to a neighbor advertisement packet to be transmitted (Step 802). The identification information on the virtual router 500 is the identification information registered to the virtual router 601 of the record in the virtual interface management table 103 acquired by the processing of Step 801. Moreover, in the processing of Step 802, the virtual internal router 600 sets the identification information (identification information on an interface of a data transfer apparatus 200) registered to the physical interface 605 of the record acquired by the processing of Step 801 as a destination of the transmission of the neighbor advertisement packet.

Then, the virtual internal router 600 transmits the neighbor advertisement packet from the virtual interface 104 subject to processing (Step 803), and finishes the processing.

On the other hand, when it is determined that the virtual interface 104 subject to processing is internally coupled in the processing of Step 801, the virtual internal router 600 sets its own identification information to a neighbor advertisement packet to be transmitted (Step 804). Moreover, in the processing of Step 804, the virtual internal router 600 sets the identification information (identification information on an interface of a protocol processing server 100) registered to the physical interface 605 of the record acquired by the processing of Step 801 as a destination of the transmission of the neighbor advertisement packet.

Then, in the processing of Step 803, the virtual internal router 600 transmits the neighbor advertisement packet from the virtual interface 104 subject to processing, and finishes the processing.

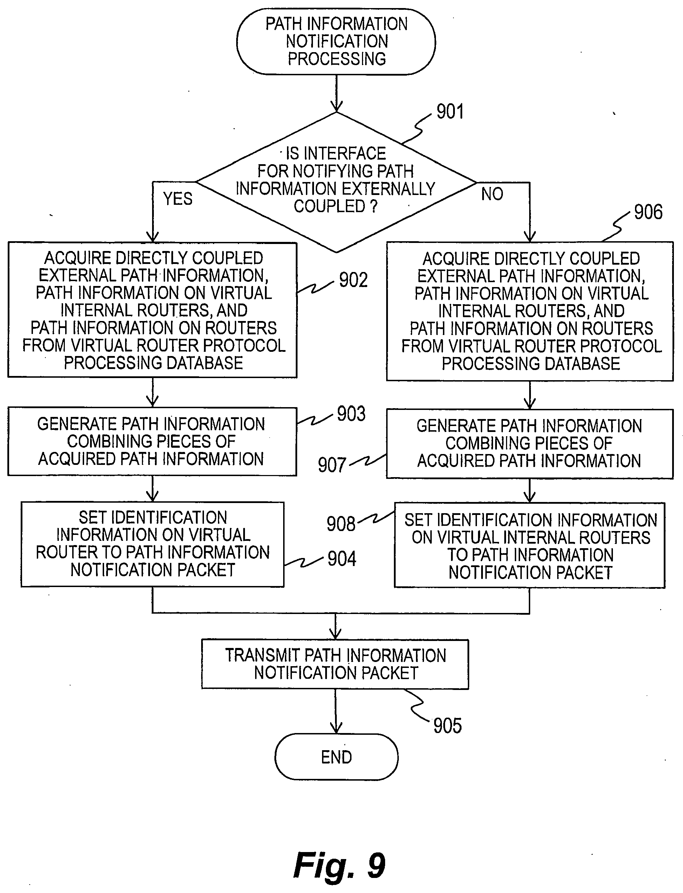

FIG. 9 is a flowchart illustrating the path information notification processing according to the first embodiment of this invention.

The path information notification processing is carried out repeatedly by the virtual internal router 600 at a predetermined timing.

First, the virtual internal router 600 determines whether the virtual interface 104 (hereinafter referred to as virtual interface 104 subject to processing) from which the path information notification packet is to be transmitted is externally coupled or not (Step 901). Details of the processing of Step 901 are the same as those of the processing of Step 801 of FIG. 8, and a description thereof is therefore omitted.

When it is determined that the virtual interface 104 subject to processing is externally coupled in the processing of Step 901, the virtual internal router 600 refers to the virtual router protocol processing database 109, thereby acquiring the path information on the external networks to which the virtual internal router 600 itself directly couples, the path information included in path information notification packets transmitted from other virtual internal routers 600, and the path information included in path information notification packets transmitted from the routers 300 (Step 902).

Then, the virtual internal router 600 generates path information (path information combining the path information acquired by the processing of Step 902) on the external couplings of the virtual router 500 (Step 903).

Then, the virtual internal router 600 stores the path information generated by the processing of Step 903 in the path information notification packet to be transmitted, and sets the transmission source of the path information notification packet to the identification information on the virtual router 500 to which the virtual internal router 600 itself belongs (Step 904). Moreover, in the processing of Step 904, the virtual internal router 600 sets the identification information (identification information on an interface of a data transfer apparatus 200) registered to the physical interface 605 of the record acquired by the processing of Step 901 as a destination of the transmission of the path information notification packet.

Then, the virtual internal router 600 transmits the path information notification packet from the virtual interface 104 subject to processing (Step 905), and finishes the processing.

On the other hand, when it is determined that the virtual interface 104 subject to processing is internally coupled in the processing of Step 901, the virtual internal router 600 refers to the virtual router protocol processing database 109, thereby acquiring the path information on the external networks to which the virtual internal router 600 itself directly couples, the path information included in path information notification packets transmitted from virtual internal routers 600 other than the virtual internal router 600 as the transmission destination of the path information notification packet, and the path information included in path information notification packets transmitted from the routers 300 (Step 906). In FIG. 7, only the virtual internal routers 600A and 600B internally coupled to each other are illustrated, and path information transmitted from virtual internal routers 600 other than the virtual internal routers 600 internally coupled is thus not transmitted in the processing of Steps 713 and 714. However, for example, when a virtual internal router coupled to the virtual internal router 600A exists, the path information included in the path information notification packet transmitted from this virtual internal router is also transmitted to the virtual internal router 600B in the processing of Step 713.

Then, the virtual internal router 600 generates path information (path information combining the path information acquired by the processing of Step 906) on the external couplings of the virtual router 500 (Step 907).

Then, the virtual internal router 600 stores the path information generated by the processing of Step 907 in the path information notification packet to be transmitted, and sets the transmission source of the path information notification packet to its own identification information (Step 908). Moreover, in the processing of Step 908, the virtual internal router 600 sets the identification information (identification information on an interface of a protocol processing server 100) registered to the physical interface 605 of the record acquired by the processing of Step 901 as a destination of the transmission of the path information notification packet.

Then, in the processing of Step 905, the virtual internal router 600 transmits the path information notification packet from the virtual interface 104 subject to processing, and finishes the processing.

As in the description that has been given of the processing of Steps 902 and 906, the virtual internal router 600 transmits the path information on the external couplings of the virtual router 500 by means of a routing protocol (such as the OSPF and the BGP), and does not transmit the path information (path information between virtual internal routers 600) on internal couplings to other virtual internal routers 600 by means of the routing protocol. This is because unlike the coupling between the data transfer apparatus 200, the internal coupling between the virtual internal routers 600 does not require the exchange of the path information.

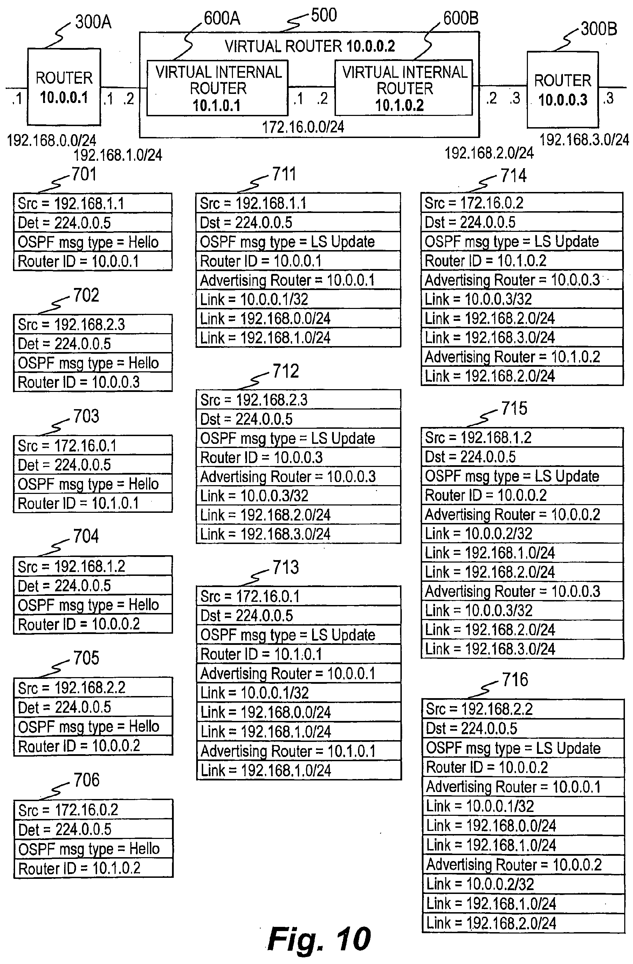

FIG. 10 is a diagram illustrating an example of the neighbor advertisement and the path information notification when the routing protocol used in the first embodiment of this invention is the OSPF.

When the virtual internal router 600A carries out the neighbor advertisement via the internal coupling (Step 703), the virtual internal router 600A transmits the neighbor advertisement packet including the identification information (Router ID: 10.1.0.1) on the virtual internal router 600A. When the virtual internal router 600A carries out the neighbor advertisement via the external coupling (Step 704), the virtual internal router 600A transmits the neighbor advertisement packet including the identification information (Router ID: 10.0.0.2) on the virtual router 500.

When the virtual internal router 600B carries out the neighbor advertisement via the internal coupling (Step 706), the virtual internal router 600B transmits the neighbor advertisement packet including the identification information (Router ID: 10.1.0.2) on the virtual internal router 600B. When the virtual internal router 600B carries out the neighbor advertisement via the external coupling (Step 705), the virtual internal router 600B transmits the neighbor advertisement packet including the identification information (Router ID: 10.0.0.2) on the virtual router 500.

When the virtual internal router 600A carries out the path information notification via the internal coupling (Step 713), the virtual internal router 600A transmits a path information notification including the identification information (Router ID: 10.1.0.1) on the virtual internal router 600A, the path information (Links: 10.0.0.1 / 32, 192.168.0.0/24, and 192.168.1.0/24) received from the router 300A in Step 711, and the path information (Link: 192.168.1.0/24) on the external network to which the virtual internal router 600A itself directly couples. When the virtual internal router 600A carries out the path information notification via the external coupling (Step 715), the virtual internal router 600A transmits a path information notification including the identification information (Router ID: 10.0.0.2) on the virtual router 500, the path information (Links: 10.0.0.2/32 and 192.168.1.0/24) on the external networks to which the virtual internal router 600A itself directly couples, and the path information (Links: 192.168.2.0/24, 10.0.0.3/32, 192.168.2.0/24, and 192.168.3.0/24) received from the virtual internal router 600B in Step 714.

When the virtual internal router 600B carries out the path information notification via the internal coupling (Step 714), the virtual internal router 600B transmits a path information notification including the identification information (Router ID: 10.1.0.2) on the virtual internal router 600B, the path information (Links: 10.0.0.3/32, 192.168.2.0/24, and 192.168.3.0/24) received from the router 300B in Step 712, and the path information (Link: 192.168.2.0/24) on the external network to which the virtual internal router 600B itself directly couples. When the virtual internal router 600B carries out the path information notification via the external coupling (Step 716), the virtual internal router 600B transmits a path information notification including the identification information (Router ID: 10.0.0.2) on the virtual router 500, the path information (Links: 10.0.0.2/32 and 192.168.2.0/24) on the external networks to which the virtual internal router 600B itself directly couples, and the path information (Links: 10.0.0.1/32, 192.168.0.0/24, 192.168.1.0/24, and 192.168.1.0/24) received from the virtual internal router 600A in Step 713.

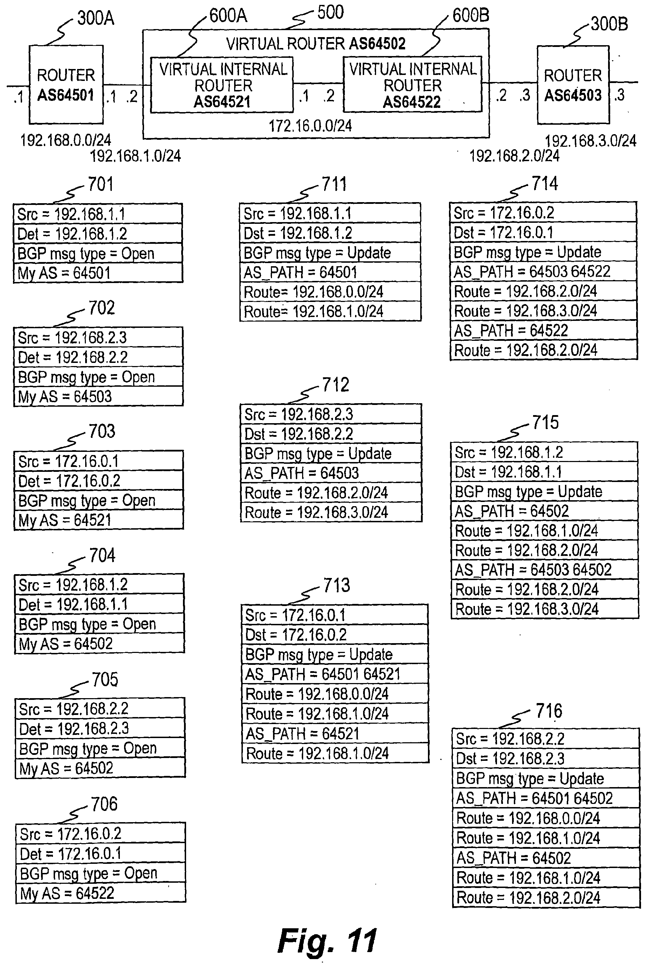

FIG. 11 is a diagram illustrating an example of the neighbor advertisement and the path information notification when the routing protocol used in the first embodiment of this invention is the BGP.

When the virtual internal router 600A carries out the neighbor advertisement via the internal coupling (Step 703), the virtual internal router 600A transmits the neighbor advertisement packet including the identification information (My AS: 64521) on the virtual internal router 600A. When the virtual internal router 600A carries out the neighbor advertisement via the external coupling (Step 704), the virtual internal router 600A transmits the neighbor advertisement packet including the identification information (My AS: 64502) on the virtual router 500.

When the virtual internal router 600B carries out the neighbor advertisement via the internal coupling (Step 706), the virtual internal router 600B transmits the neighbor advertisement packet including the identification information (My AS: 64522) on the virtual internal router 600B. When the virtual internal router 600B carries out the neighbor advertisement via the external coupling (Step 705), the virtual internal router 600B transmits the neighbor advertisement packet including the identification information (My AS: 64502) on the virtual router 500.

When the virtual internal router 600A carries out the path information notification via the internal coupling (Step 713), the virtual internal router 600A transmits a path information notification including the identification information (AS: 64521) on the virtual internal router 600A, the path information (Routes: 192.168.0.0/24 and 192.168.1.0/24) received from the router 300A in Step 711, and the path information (Route: 192.168.1.0/24) on the external network to which the virtual internal router 600A itself directly couples. When the virtual internal router 600A carries out the path information notification via the external coupling (Step 715), the virtual internal router 600A transmits a path information notification including the identification information (AS: 64502) on the virtual router 500, the path information (Route: 192.168.1.0/24) on the external networks to which the virtual internal router 600A itself directly couples, and the path information (Routes: 192.198.2.0/24, 192.168.2.0/24, and 192.168.3.0/24) received from the virtual internal router 600B in Step 714.

When the virtual internal router 600B carries out the path information notification via the internal coupling (Step 714), the virtual internal router 600B transmits a path information notification including the identification information (AS: 64522) on the virtual internal router 600B, the path information (Routes: 192.168.2.0/24 and 192.168.3.0/24) received from the router 300B in Step 712, and the path information (Route: 192.168.2.0/24) on the external network to which the virtual internal router 600B itself directly couples. When the virtual internal router 600B carries out the path information notification via the external coupling (Step 716), the virtual internal router 600B transmits a path information notification including the identification information (AS: 64502) on the virtual router 500, the path information (Route: 192.168.2.0/24) on the external networks to which the virtual internal router 600B itself directly couples, and the path information (Routes: 192.168.0.0/24, 192.168.1.0/24, and 192.168.1.0/24) received from the virtual internal router 600A in Step 713.

It should be noted that, in FIGS. 10 and 11, the information on the internal coupling between the virtual internal router 600 and another virtual internal router 600 is "172.16.0.0/24". As illustrated in FIGS. 10 and 11, the information transmitted/received by the processing of Steps 701 to 716 does not include the information (172.16.0.0/24) on the internal coupling between the virtual internal router 600 and another virtual internal router 600.

As a result, according to this embodiment, in the communication system including the protocol processing servers 100 for carrying out the protocol processing on the IP layer, each of the protocol processing servers 100 holds the virtual interface management table 103 to which identification information on the interface 201 of the data transfer apparatus 200 transferring protocol packets to the protocol processing server 100 itself is registered. As a result, the communication system in which each of the plurality of the protocol processing servers 100 can manage the data transfer apparatus 200 for transmitting the protocol packets to the protocol processing server 100 itself and which includes the plurality of protocol processing servers 100 can be provided.

Moreover, according to this embodiment, the virtual internal router 600 refers to the virtual interface management table 103, thereby determining whether the virtual interface 104 is coupled externally or internally. Then, when the virtual interface 104 is coupled externally, the virtual internal router 600 transmits the neighbor advertisement packet including the identification information on the virtual router 500 to which the virtual internal router 600 belongs via the data transfer apparatus 200 to the routers 300, and when the virtual interface 104 is internally coupled, transmits the neighbor advertisement packet including the identification information on the virtual internal router 600 to other virtual internal routers 600. As a result, even in the communication system including the routers 300 recognizing the plurality of protocol processing servers 100 and data transfer apparatus 200 as the virtual router 500, the virtual internal router 600 operating on the protocol processing server 100 can notify the routers 300 of the identification information on the virtual router 500, and can notify other virtual internal routers 600 of the identification information on itself (virtual internal router 600). Thus, the router 300 can recognize the first communication network as the virtual router 500, and the virtual internal router 600 can recognize the other virtual internal routers 600 as different virtual internal routers 600.

Moreover, according to this embodiment, when the virtual interface 104 is externally coupled, the virtual internal router 600 transmits, from the virtual interface 104, the path information notification packet combining the path information on the external networks to which the virtual internal router 600 itself directly couples, the path information included in the path information notification packets transmitted from other virtual internal routers 600, and the path information included in the path information notification packets directly transmitted from the routers 300. Moreover, when the virtual interface 104 is externally coupled, the virtual internal router 600 transmits, from the virtual interface 104, the path information notification packet including the path information on the external networks to which the virtual internal router 600itself directly couples, and the path information included in the path information notification packets directly transmitted from the routers 300. As a result, the information on a path between the virtual internal routers 600 is not exchanged by the virtual internal routers 600, and the unnecessary path information is thus not exchanged. Accordingly, the network traffic can be reduced. Moreover, the router 300 can recognize the path information on the opposite router 300.

Further, according to this embodiment, the data transfer apparatus 200 holds the virtual interface management table 204 to which the identification information on the virtual interface 104 of the virtual internal router 600, which is the transfer destination of the protocol packet, is registered, refers to the virtual interface management table 204, and transfers the protocol packet to the virtual interface 104, which is the transfer destination. As a result, even when the plurality of protocol processing servers 100 exist in the communication system, the protocol packet can be correctly transferred.

### [Second Embodiment]

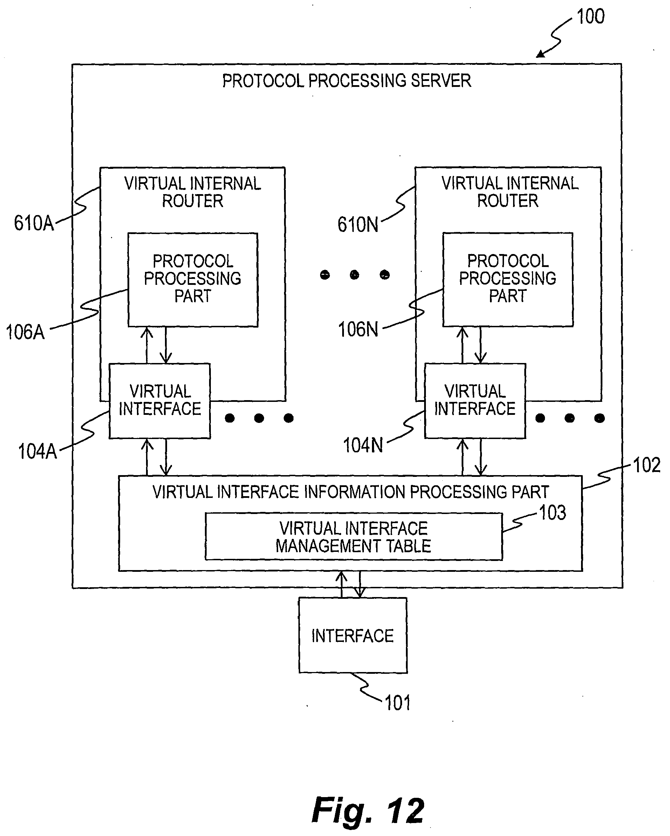

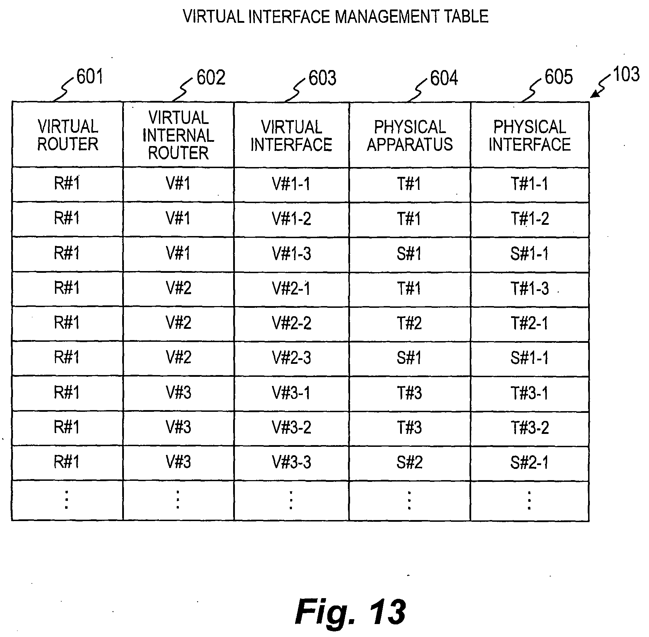

Referring to FIGS. 12 and 13, a description is now given of a second embodiment of this invention.

While a single virtual internal router 600 operates on the protocol processing server 100 in the first embodiment, a plurality of virtual internal routers 600 operate on the protocol processing server 100 in this embodiment.

FIG. 12 is an explanatory diagram of the protocol processing server 100 according to the second embodiment of this invention.

The protocol processing server 100 includes an interface 101, a virtual interface information processing part 102, and a plurality of virtual internal routers 610A to 610*N*.

The interface 101 and the virtual interface information processing part 102 have the same functions as those of the configurations denoted by the same reference numerals illustrated in FIG. 5 described above, and a description thereof is therefore omitted. Moreover, the virtual internal routers 610A to 610*N* have the same functions as those of the virtual internal router 600 illustrated in FIG. 5, and a description thereof is therefore omitted. It should be noted that the virtual internal routers 610A to 610*N* are collectively referred to as virtual internal router 600. In FIG. 12, the configurations of the protocol processing parts 106A to 106*N* included in the virtual internal routers 610A to 610*N* are omitted, but each of the protocol processing parts 106A to 106*N* includes the external protocol processing part 107, the internal protocol processing part 108, and the virtual router protocol processing database 109, which is the same as the configuration illustrated in FIG. 5.

An administrator of the communication system can control the virtual internal router 600 operating on a certain protocol processing server 100 to migrate to another protocol processing server 100. When the virtual internal router 600 is controlled to migrate to another protocol processing server 100 in this way, for example, a plurality of virtual internal routers 600 operate on the protocol processing server 100. When the administrator initially provides such a setting that a plurality of virtual internal routers 600 operate on the protocol processing server 100, the plurality of virtual internal routers 600 also operate on the protocol processing server 100.

FIG. 13 is an explanatory diagram of the virtual interface management table 103 according to the second embodiment of this invention.

The virtual interface management table 103 according to this embodiment includes the virtual routers 601, the virtual internal routers 602, the virtual interfaces 603, the physical apparatus 604, and the physical interfaces 605.

The virtual router 601, the virtual internal router 602, the virtual interface 603, the physical apparatus 604, and the physical interface 605 have the same functions as those of the configurations denoted by the same reference numerals illustrated in FIG. 6 described above, and a description thereof is therefore omitted.

As shown on third and sixth rows in the virtual interface management table 103, the physical apparatus 604 of the virtual interfaces 104 (V#1-3 and V#2-3) of the virtual internal routers 600 (V#1 and V#2) is the protocol processing server 100 (S#1), and the two virtual internal routers 600 (V#1 and V#2) thus operate on the single protocol processing server 100 (S#1).

The neighbor advertisement processing and the path information notification processing according to this embodiment are the same as the pieces of processing of FIGS. 7 to 9 according to the first embodiment, and a description thereof is therefore omitted.

### [Third Embodiment]

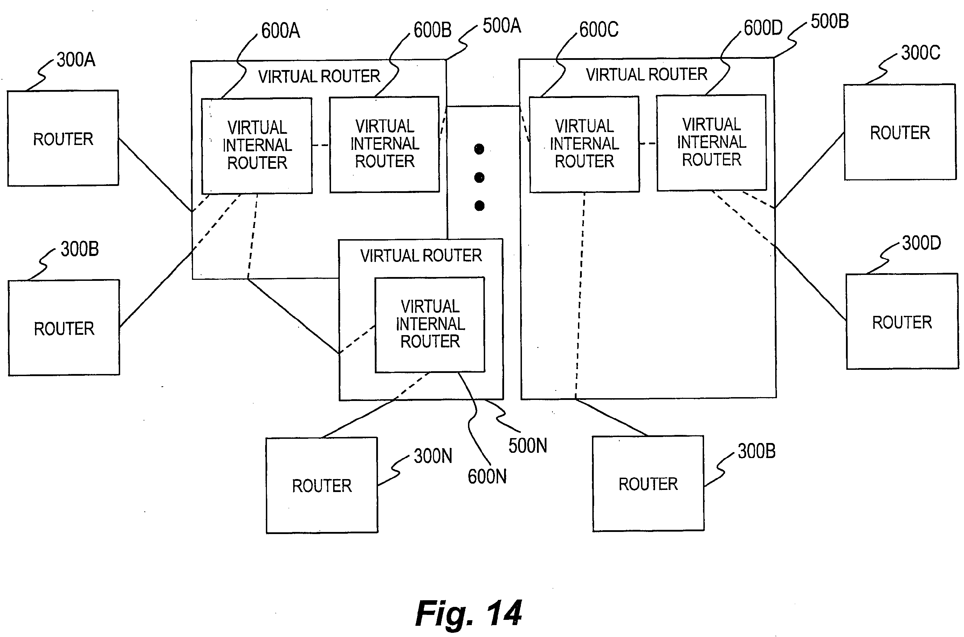

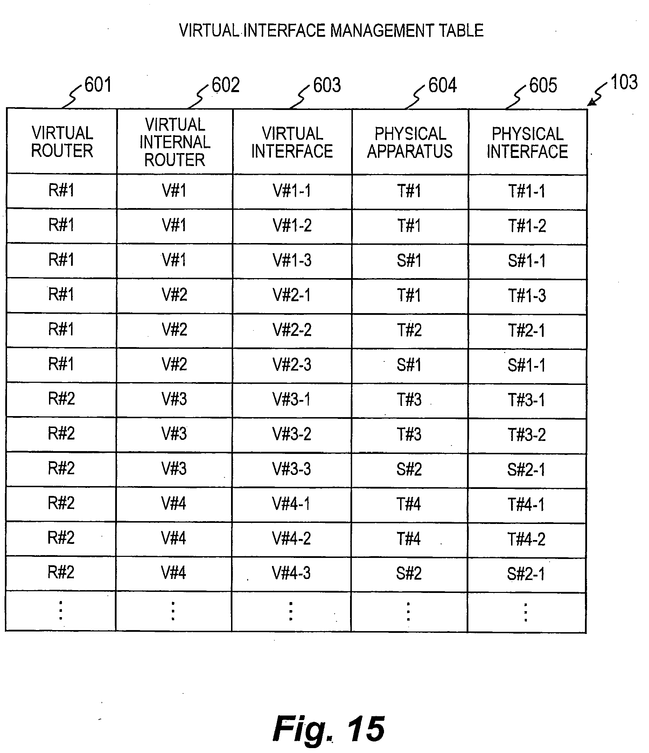

Referring to FIGS. 14 and 15, a description is now given of a third embodiment of this invention.

While the first communication network functions as the single virtual router 500 in the first and second embodiments, the first communication network functions as a plurality of virtual routers 500 in this embodiment.

FIG. 14 is an explanatory diagram of the first communication network according to the third embodiment of this invention.

In this embodiment, the first communication network is recognized as the plurality of virtual routers 500A to 500*N* by the router 300.

The virtual router 500A includes virtual internal routers 600A and 600B. The virtual router 500B includes virtual internal routers 600C and 600D. The virtual router 500*N* includes a virtual internal router 600*N*.

In the case where the first communication network functions as the single virtual router 500, when a failure occurs on a path of the first communication network, the administrator needs to use centralized control by the network control server 400 to reconstruct the paths in the first communication network. However, in the case where the first communication network functions as the plurality of virtual routers 500, when a failure occurs on a path in the first communication network, the paths in the first communication network are reconstructed in an autonomous distributed manner by the IP routing control among the virtual routers 500. Therefore, such an effect that the load imposed on the administrator can be alleviated is provided.

In FIG. 14, for example, the virtual internal routers 600B and 600C are coupled to each other between the virtual routers 500A and 500B, and the coupling is thus a coupling between the data transfer apparatus 200B and 200C and corresponds to the external coupling described above in the first embodiment.

FIG. 15 is an explanatory diagram of the virtual interface management table 103 according to the third embodiment of this invention.

The virtual interface management table 103 according to this embodiment includes the virtual routers 601, the virtual internal routers 602, the virtual interfaces 603, the physical apparatus 604, and the physical interfaces 605.

The virtual router 601, the virtual internal router 602, the virtual interface 603, the physical apparatus 604, and the physical interface 605 have the same functions as those of the configurations denoted by the same reference numerals illustrated in FIG. 6 described above, and a description thereof is therefore omitted.

The coupling between the virtual internal routers 600B and 600C according to this embodiment, namely, the coupling between the data transfer apparatus 200B and 200C corresponds to a coupling between a virtual interface (V#2-2) of the virtual internal router (V#2), namely, a physical interface (T#2-1) of a physical apparatus (T#2), and a virtual interface (V#3-1) of the virtual internal router (V#3), namely, a physical interface (T#3-1) of a physical apparatus (T#3).

The neighbor advertisement processing and the path information notification processing according to this embodiment are the same as the pieces of processing of FIGS. 7 to 9 according to the first embodiment, and a description thereof is therefore omitted.

In this embodiment, the first communication network is recognized as the plurality of virtual routers 500 by the routers 300. When a virtual internal router 600 belonging to a virtual router 500 Is coupled to another virtual internal router 600 belonging to another virtual router 500 different from the virtual router 500 to which the virtual internal router 600 itself belongs, the virtual interface 104 Is determined to be externally coupled. As a result, when the virtual internal router 600 belonging to the virtual router 500 is coupled to another virtual internal router 600 belonging to the same virtual router 500, the virtual internal router 500 transmits a neighbor advertisement packet including the identification information on the virtual router 500 to which the virtual internal router 600 itself belongs In the neighbor advertisement processing, and transmits a path information notification packet including path information combining path information received from another virtual internal router and path information directly received from the virtual router 500 in the path information notification processing.

Each of the above-mentioned embodiments is a preferred embodiment of this invention, and various modifications and changes may be made without departing from the scope of this invention.

This invention is not limited to the embodiment described above, and includes various modification examples. For instance, the embodiment given above is a detailed description that is written for easy understanding of this invention, and this invention is not necessarily limited to a mode that includes all the components described. Replacing some components of one embodiment with components of another embodiment is also an option. Components of one embodiment may be added with components of another embodiment. For some components in each embodiment, other components may be added or deleted or may substitute.

Some of or all of the components, functions, processing parts, processing measures, and the like described above may be implemented by hardware by, for example, designing those in the form of an integrated circuit. Alternatively, the components, functions, and the like described above may be implemented by software by having a processor interpret and execute programs that respectively implement the described functions. Programs, tables, files, and other types of information for implementing the described functions can be put in a memory, a recording device such as a hard disk or a solid state drive (SSD), or a recording medium such as an IC card, an SD card, or a DVD.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A protocol processing computer (100) for carrying out, In a communication system for coupling a first communication network including a data transfer apparatus (200) as a component and a second communication network including a router (300) as a component to each other, protocol processing for protocol data, which requires protocol processing on an IP layer and is transmitted from the data transfer apparatus (200),
the first communication network being constructed by centralized control by a network control computer (400),
the second communication network being constructed by autonomous distributed control by using a protocol on the IP layer of the router (300),
the protocol processing computer (100) being **characterized in that**
the data transfer apparatus (200) is configured to transfer the protocol data transmitted from the router (300) to any one of the protocol processing computers (100), and
the protocol processing computer (100) is configured to:
carry out, when receiving the protocol data, the protocol processing on the IP layer for the received protocol data; and
hold identification Information on an interface included in the data transfer apparatus (200) for transferring the protocol data to the protocol processing computer (100), thereby managing the data transfer apparatus (200) for transferring the protocol data to the protocol processing computer (100).

2. The protocol processing computer (100) according to claim 1, wherein:
the router (300) is configured to recognize the first communication network as at least one virtual router (500);
the protocol processing computer (100) comprises a virtual Internal router (600) operating thereon;
the virtual internal router (600) has a plurality of virtual interfaces (104);
one of an interface included in the protocol processing computer (100) and an interface included In the data transfer apparatus (200) for transferring the protocol data to the protocol processing computer (100) is associated with each of the plurality of virtual interfaces (104) as a physical interface; and
the protocol processing computer (100) is further configured to hold a virtual interface management table (103) to which identification information on the physical interface with which the each of the plurality of virtual interfaces (104) is associated is registered, thereby managing the data transfer apparatus (200) for transferring the protocol data to the protocol processing computer (100).

3. The protocol processing computer (100) according to claim 2, wherein the virtual internal router (600) operating on the protocol processing computer (100) is configured to:
transmit, at a predetermined timing, from one of the plurality of virtual interfaces (104), neighbor advertisement data for advertising the virtual internal router (600); and
refer, when the neighbor advertisement data is to be transmitted, to the virtual interface management table, thereby determining whether the physical interface associated with the one of the plurality of virtual interfaces (104) for transmitting the neighbor advertisement data is the Interface of the data transfer apparatus (200) or not;
determine, when the physical interface associated with the one of the plurality of virtual interfaces (104) for transmitting the neighbor advertisement data is determined to be the interface of the data transfer apparatus (200), the one of the plurality of virtual interfaces (104) is coupled via the data transfer apparatus (200) to the router (300), and transmit the neighbor advertisement data including identification information on the virtual router (500) to which the virtual internal router (600) belongs from the one of the plurality of virtual interfaces (104); and
determine, when the physical interface associated with the one of the plurality of virtual interfaces (104) for transmitting the neighbor advertisement data is determined not to be the interface of the data transfer apparatus (200), the one of the plurality of virtual interfaces (104) is coupled to another virtual internal router (600), and transmit the neighbor advertisement data including identification information on the virtual internal router (600) from the one of the plurality of virtual interfaces (104).

4. The protocol processing computer (100) according to claim 2, wherein:
the router (300) is further configured to transmit path information notification data including path information held by the router (300) as the protocol data to the data transfer apparatus (200);
the data transfer apparatus (200) Is further configured to transfer, when receiving the path information notification data, the received path information notification data to the protocol processing computer (100); and
the virtual internal router (600) operating on the protocol processing computer (100) is configured to:
store, when receiving the path information notification data from one of the router (300) and another virtual internal router (600), the path information included in the path information notification data and identification information on a transmission source of the path information notification data in association with each other;
transmit the path information notification data at a predetermined timing from one of the plurality of virtual interfaces (104);
refer, when the path information notification data is to be transmitted, to the virtual interface management table, thereby determining whether the physical interface associated with the one of the plurality of virtual interfaces (104) for transmitting the path information notification data is the interface of the data transfer apparatus (200) or not;
determine, when the physical interface associated with the one of the plurality of virtual interfaces (104) for transmitting the path information notification data Is determined to be the interface of the data transfer apparatus (200), the one of the plurality of virtual interfaces (104) is coupled via the data transfer apparatus (200) to the router (300), and transmit, from the one of the plurality of virtual interfaces (104), the path information notification data including path information combining the path information included in the path information notification data transmitted from the router (300) and the path information included in the path information notification data transmitted from the another virtual internal router (600); and
determine, when the physical interface associated with the one of the plurality of virtual interfaces (104) for transmitting the path information notification data is determined notto be the interface of the data transfer apparatus (200), the one of the plurality of virtual interfaces is cou pled to the another virtual internal router, and transmit, from the one of the plurality of virtual interfaces (104), the path information notification data including the path information included in the path information notification data transmitted from the router (300).

5. The protocol processing computer (100) according to claim 4, wherein the virtual internal router (600) operating on the protocol processing computer (100) is further configured to:
transmit the path information other than the path information on the coupling to another virtual internal router (600) by using a routing protocol and
avoid transmitting the path information on the coupling to the another virtual Internal router (600) by using the routing protocol.

6. A communication system for coupling a first communication network including a data transfer apparatus (200) as a component and a second communication network including a router (300) as a component to each other,
the communication system comprising:
the data transfer apparatus (200);
the router (300);
a plurality of protocol processing computers (100) according to at least one of claims 1 to 5; and
a network control computer (400),
the router (300) being configured to transmit protocol data requiring protocol processing on the IP layer to the data transfer apparatus (200).

7. A communication method for data in a communication system for coupling a first communication network including a data transfer apparatus (200) as a component and a second communication network including a router (300) as a component to each other,
the communication system having:
the data transfer apparatus (200);
the router (300);
a plurality of protocol processing computers (100); and
a network control computer (400),
the first communication network being constructed by a centralized control by the network control computer (400),
the second communication network being constructed by autonomous distributed control by using a protocol on an IP layer by the router (300),
the router (300) being configured to recognize the first communication network as at least one virtual router (500),
each of the plurality of protocol processing computers (100) comprising a virtual internal router (600) operating thereon,
the virtual internal router (600) having a plurality of virtual interfaces (104),
one of an interface included in the each of the plurality of protocol processing computers (100) and an interface included in the data transfer apparatus (200) for transferring the protocol data to the each of the plurality of protocol processing computers (100) being associated with each of the plurality of virtual interfaces (104) as a physical interface;
the communication method including:
transmitting, by the router (300), protocol data requiring protocol processing on the IP layer to the data transfer apparatus (200); and being **characterized In**
transferring, by the data transfer apparatus (200), the protocol data transmitted from the router (300) to any one of the plurality of protocol processing computers (100);
carrying out, by the one of the plurality of protocol processing computers (100), when receiving the protocol data, the protocol processing on the IP layer for the received protocol data; and
holding, by the one of the plurality of protocol processing computers (100), a virtual interface management table (103) to which identification information on the physical interface with which each of the plurality of virtual interfaces (104) is associated is registered, thereby managing the data transfer apparatus (200) for transferring the protocol data to the one of the plurality of protocol processing computers (100).

## Patentansprüche

1. Protokollverarbeitungscomputer (100) zum Ausführen einer Protokollverarbeitung für Protokolldaten, die eine Protokollverarbeitung auf einer IP-Schicht benötigen und von einer Datenübertragungsvorrichtung (200) gesendet werden, in einem Kommunikationssystem zum Koppeln eines ersten Kommunikationsnetzes, das die Datenübertragungsvorrichtung (200) als eine Komponente enthält, und eines zweiten Kommunikationsnetzes, das einen Router (300) als eine Komponente enthält, miteinander,
wobei das erste Kommunikationsnetz durch eine zentralisierte Steuerung durch einen Netzsteuercomputer (400) errichtet ist,
wobei das zweite Kommunikationsnetz durch eine autonome verteilte Steuerung durch Verwenden eines Protokolls auf der IP-Schicht des Routers (300) errichtet ist,
wobei der Protokollverarbeitungscomputer (100) **dadurch gekennzeichnet ist, dass**
die Datenübertragungsvorrichtung (200) konfiguriert ist, die von dem Router (300) gesendeten Protokolldaten an einen der Protokollverarbeitungscomputer (100) zu übertragen, und
der Protokollverarbeitungscomputer (100) konfiguriert ist:
dann, wenn er die Protokolldaten empfängt, die Protokollverarbeitung auf der IP-Schicht für die empfangenen Protokolldaten auszuführen; und
Identifikationsinformationen auf einer Schnittstelle, die in der Datenübertragungsvorrichtung (200) enthalten ist, zu halten, um die Protokolldaten an den Protokollverarbeitungscomputer (100) zu übertragen, wodurch die Datenübertragungsvorrichtung (200) für das Übertragen der Protokolldaten an den Protokollverarbeitungscomputer (100) gemanagt wird.

2. Protokollverarbeitungscomputer (100) nach Anspruch 1, wobei:
der Router (300) konfiguriert ist, das erste Kommunikationsnetz als mindestens einen virtuellen Router (500) anzuerkennen;
der Protokollverarbeitungscomputer (100) einen virtuellen internen Router (600) umfasst, der auf ihm arbeitet,
der virtuelle interne Router (600) mehrere virtuelle Schnittstellen (104) besitzt;
entweder eine Schnittstelle, die in dem Protokollverarbeitungscomputer (100) enthalten ist, oder eine Schnittstelle, die in der Datenübertragungsvorrichtung (200) zum Übertragen der Protokolldaten an den Protokollverarbeitungscomputer (100) enthalten ist, jeder der mehreren virtuellen Schnittstellen (104) als eine physikalische Schnittstelle zugeordnet ist; und
der Protokollverarbeitungscomputer (100) ferner konfiguriert ist, eine Managementtabelle für virtuelle Schnittstellen (103) zu enthalten, in der Identifikationsinformationen über die physikalische Schnittstelle, der jede der mehreren virtuellen Schnittstellen (104) zugeordnet ist, registriert werden, wodurch die Datenübertragungsvorrichtung (200) für das Übertragen der Protokolldaten an den Protokolldatenverarbeitungscomputer (100) gemanagt wird.

3. Protokollverarbeitungscomputer (100) nach Anspruch 2, wobei der virtuelle interne Router (600), der auf dem Protokollverarbeitungscomputer (100) arbeitet, konfiguriert ist:
zu einem vorgegebenen Zeitpunkt von einer der mehreren virtuellen Schnittstellen (104) Nachbarwerbedaten zum Anzeigen des virtuellen internen Routers (600) zu senden; und
sich dann, wenn die Nachbarwerbedaten zu senden sind, auf die Managementtabelle für virtuelle Schnittstellen zu beziehen, wodurch bestimmt wird, ob die physikalische Schnittstelle, die der einen der mehreren virtuellen Schnittstellen (104) zum Senden der Nachbarwerbedaten zugeordnet ist, die Schnittstelle der Datenübertragungsvorrichtung (200) ist oder nicht;
dann, wenn bestimmt wird, dass die physikalische Schnittstelle, die der einen der mehreren virtuellen Schnittstellen (104) zum Senden der Nachbarwerbedaten zugeordnet ist, die Schnittstelle der Datenübertragungsvorrichtung (200) ist, zu bestimmen, dass die eine der mehreren virtuellen Schnittstellen (104) über die Datenübertragungsvorrichtung (200) an den Router (300) gekoppelt wird, und die Nachbarwerbedaten, die Identifikationsinformationen über den virtuellen Router (500) enthalten, zu dem der virtuelle interne Router (600) gehört, von einer der mehreren virtuellen Schnittstellen (104) zu senden; und
dann, wenn bestimmt wird, dass die physikalische Schnittstelle, die der einen der mehreren virtuellen Schnittstellen (104) zum Senden der Nachbarwerbedaten zugeordnet ist, nicht die Schnittstelle der Datenübertragungsvorrichtung (200) ist, zu bestimmen, dass die eine der mehreren virtuellen Schnittstellen (104) mit einem anderen virtuellen internen Router (600) gekoppelt wird, und die Nachwerbedaten, die Identifikationsinformationen über den virtuellen internen Router (600) enthalten, von der einen der mehreren virtuellen Schnittstellen (104) zu senden.

4. Protokollverarbeitungscomputer (100) nach Anspruch 2, wobei:
der Router (300) ferner konfiguriert ist, Weginformationsbenachrichtigungsdaten, die Weginformationen, die durch den Router (300) gehalten werden, als die Protokolldaten an die Datenübertragungsvorrichtung (200) zu senden;
die Datenübertragungsvorrichtung (200) ferner konfiguriert ist, dann, wenn sie die Weginformationsbenachrichtigungsdaten empfängt, die empfangenen Weginformationsbenachrichtigungsdaten an den Protokollverarbeitungscomputer (100) zu senden; und
der virtuelle interne Router (600), der auf dem Protokollverarbeitungscomputer (100) arbeitet, konfiguriert ist:
dann, wenn er die Weginformationsbenachrichtigungsdaten von einem der Router (300) und einem anderen virtuellen internen Router (600) empfängt, die Weginformationen, die in den Weginformationsbenachrichtigungsdaten enthalten sind, und Identifikationsinformationen über eine Übertragungsquelle der Weginformationsbenachrichtigungsdaten in Verbindung miteinander zu speichern;
die Weginformationsbenachrichtigungsdaten zu einem vorgegebenen Zeitpunkt von einer der mehreren virtuellen Schnittstellen (104) zu senden;
sich dann, wenn die Weginformationsbenachrichtigungsdaten zu senden sind, auf die Managementtabelle für virtuelle Schnittstellen zu beziehen, wodurch bestimmt wird, ob die physikalische Schnittstelle, die der einen der mehreren virtuellen Schnittstellen (104) zum Senden der Weginformationsbenachrichtigungsdaten zugeordnet ist, die Schnittstelle der Datenübertagungsvorrichtung (200) ist oder nicht;
dann, wenn bestimmt wird, dass die physikalische Schnittstelle, die der einen der mehreren virtuellen Schnittstellen (104) zum Senden der Weginformationsbenachrichtigungsdaten zugeordnet ist, die Schnittstelle der Datenübertragungsvorrichtung (200) ist, zu bestimmen, dass die eine der mehreren virtuellen Schnittstellen (104) über die Datenübertragungsvorrichtung (200) an den Router (300) gekoppelt wird, und von der einen der mehreren virtuellen Schnittstellen (104) die Weginformationsbenachrichtigungsdaten, die Weginformationen enthalten, die die in den Weginformationsbenachrichtigungsdaten, die von dem Router (300) gesendet wurden, enthaltenen Weginformationen und die in den Weginformationsbenachrichtigungsdaten, die von dem anderen virtuellen internen Router (600) gesendet wurden, enthaltenen Weginformationen verbinden, zu senden; und
dann, wenn bestimmt wird, dass die physikalische Schnittstelle, die der einen der mehreren virtuellen Schnittstellen (104) zum Senden der Weginformationsbenachrichtigungsdaten zugeordnet ist, nicht die Schnittstelle der Datenübertragungsvorrichtung (200) ist, zu bestimmen, dass die eine der mehreren virtuellen Schnittstellen an den anderen virtuellen internen Router gekoppelt wird, und von der einen der mehreren virtuellen Schnittstellen (104) die Weginformationsbenachrichtigungsdaten, die die Weginformationen enthalten, die in den Weginformationsbenachrichtigungsdaten, die von dem Router (300) gesendet wurden, enthalten sind, zu senden.

5. Protokollverarbeitungscomputer (100) nach Anspruch 4, wobei der virtuelle interne Router (600), der auf dem Protokollverarbeitungscomputer (100) arbeitet, ferner konfiguriert ist:
die Weginformationen, die von den Weginformationen über das Koppeln an einen anderen virtuellen internen Router (600) verschieden sind, durch Verwenden eines Routing-Protokolls zu senden; und
zu vermeiden, die Weginformationen über das Koppeln an den anderen virtuellen internen Router (600) durch Verwenden des Routing-Protokolls zu senden.

6. Kommunikationssystem zum Koppeln eines ersten Kommunikationsnetzes, das eine Datenübertragungsvorrichtung (200) als eine Komponente enthält, und eines zweiten Kommunikationsnetzes, das einen Router (300) als eine Komponente enthält, miteinander,
wobei das Kommunikationssystem umfasst:
die Datenübertragungsvorrichtung (200);
den Router (300);
mehrere Protokollverarbeitungscomputer (100) nach mindestens einem der Ansprüche 1 bis 5; und
einen Netzsteuercomputer (400),
wobei der Router (300) konfiguriert ist, Protokolldaten, die eine Protokollverarbeitung auf der IP-Schicht benötigen, an die Datenübertragungsvorrichtung (200) zu senden.

7. Kommunikationsverfahren für Daten in einem Kommunikationssystem zum Koppeln eines ersten Kommunikationsnetzes, das eine Datenübertragungsvorrichtung (200) als eine Komponente enthält, und eines zweiten Kommunikationsnetzes, das einen Router (300) als eine Komponente enthält, aneinander,
wobei das Kommunikationssystem besitzt:
die Datenübertragungsvorrichtung (200);
den Router (300);
mehrere Protokollverarbeitungscomputer (100); und
einen Netzsteuercomputer (400),
wobei das erste Kommunikationsnetz durch eine zentralisierte Steuerung durch den Netzsteuercomputer (400) errichtet ist,
wobei das zweite Kommunikationssystem durch eine autonome verteilte Steuerung durch Verwenden eines Protokolls auf einer IP-Schicht durch den Router (300) errichtet ist,
wobei der Router (300) konfiguriert ist, das erste Kommunikationsnetz als mindestens einen virtuellen Router (500) anzuerkennen,
wobei jeder der mehreren Protokollverarbeitungscomputer (100) einen virtuellen internen Router (600), der auf ihm arbeitet, umfasst,
wobei der virtuelle interne Router (600) mehrere virtuelle Schnittstellen (104) besitzt;
wobei entweder eine Schnittstelle, die in jedem der mehreren Protokollverarbeitungscomputer (100) enthalten ist, oder eine Schnittstelle, die in der Datenübertragungsvorrichtung (200) zum Übertragen der Protokolldaten an jeden der mehreren Protokollverarbeitungscomputer (100) enthalten ist, einer der mehreren virtuellen Schnittstellen (104) als eine physikalische Schnittstelle zugeordnet ist;
wobei das Kommunikationsverfahren enthält:
Senden von Protokolldaten, die eine Protokollverarbeitung auf der IP-Schicht benötigen, durch den Router (300) an die Datenübertragungsvorrichtung (200) ; und **gekennzeichnet durch**:
Senden der von dem Router (300) gesendeten Protokolldaten durch die Datenübertragungsvorrichtung (200) an einen der mehreren Protokollverarbeitungscomputer (100);
Ausführen der Protokollverarbeitung auf der IP-Schicht für die empfangenen Protokolldaten **durch** einen der mehreren Protokollverarbeitungscomputer (100) dann, wenn er die Protokolldaten empfängt; und
Halten **durch** einen der mehreren Protokollverarbeitungscomputer (100) einer Managementtabelle für virtuelle Schnittstellen (103), in der Identifikationsinformationen über die physikalische Schnittstelle, der jede der mehreren virtuellen Schnittstellen (104) zugeordnet ist, registriert werden, wodurch die Datenübertragungsvorrichtung (200) für das Übertragen von Protokolldaten an den einen der mehreren Protokollverarbeitungscomputer (100) gemanagt wird.

## Revendications

1. Ordinateur de traitement de protocole (100) pour effectuer, dans un système de communication pour coupler un premier réseau de communication incluant un appareil de transfert de données (200) en tant que composant, et un second réseau de communication incluant un routeur (300) en tant que composant l'un à l'autre, un traitement de protocole pour des données de protocole, qui exige un traitement de protocole sur une couche IP et qui est transmis depuis l'appareil de transfert de données (200),
le premier réseau de communication étant construit par contrôle centralisé par un ordinateur de contrôle de réseau (400),
le second réseau de communication étant construit par contrôle distribué de façon autonome en utilisant un protocole sur la couche IP du routeur (300),
l'ordinateur de traitement de protocole (100) étant **caractérisé en ce que** l'appareil de transfert de données (200) est configuré pour transférer les données de protocole transmises depuis le routeur (300) vers l'un quelconque des ordinateurs de traitement de protocole (100), et
l'ordinateur de traitement de protocole (100) est configuré pour :
effectuer, lorsqu'il reçoit les données de protocole, le traitement de protocole sur la couche IP pour les données de protocole reçu ; et
retenir une information d'identification sur une interface incluse dans l'appareil de transfert de données (200) pour transférer les données de protocole à l'ordinateur de traitement de protocole (100), en gérant ainsi l'appareil de transfert de données (200) afin de transférer les données de protocole à l'ordinateur de traitement de protocole (100).

2. Ordinateur de traitement de protocole (100) selon la revendication 1, dans lequel :
le routeur (300) est configuré pour reconnaître le premier réseau de communication comme étant au moins un routeur virtuel (500) ;
l'ordinateur de traitement de protocole (100) comprend un routeur interne virtuel (600) fonctionnant sur lui-même ;
le routeur interne virtuel (600) a une pluralité d'interfaces virtuelles (104) ;
une interface, parmi une interface incluse dans l'ordinateur de traitement de protocole (100) et une interface incluse dans l'appareil de transfert de données (200) pour transférer les données de protocole à l'ordinateur de traitement de protocole (100), est associée avec chacune de la pluralité d'interfaces virtuelles (104) en tant qu'interface physique ; et
l'ordinateur de traitement de protocole (100) est en outre configuré pour maintenir une table de gestion d'interfaces virtuelles (103) à laquelle est enregistrée une information d'identification sur l'interface physique avec laquelle chacune de la pluralité d'interfaces virtuelles (104) est associée, en gérant ainsi l'appareil de transfert de données (200) pour transférer les données de protocole à l'ordinateur de traitement de protocole (100).

3. Ordinateur de traitement de protocole (100) selon la revendication 2, dans lequel le routeur interne virtuel (600) qui fonctionne sur l'ordinateur de traitement de protocole (100) est configuré pour :
transmettre, à une temporisation prédéterminée, depuis l'une de la pluralité d'interfaces virtuelles (104), des données d'avertissement voisines pour avertir le routeur interne virtuel (600) ; et
référer, quand les données d'avertissement voisines doivent être transmises, à la table de gestion d'interfaces virtuelles, en déterminant ainsi si l'interface physique associée avec l'interface parmi la pluralité d'interfaces virtuelles (104) pour transmettre les données d'avertissement voisines est l'interface de l'appareil de transfert de données (200) ou non ;
déterminer, quand l'interface physique associée avec l'interface parmi la pluralité d'interfaces virtuelles (104) pour transmettre les données d'avertissement voisines est déterminée comme étant l'interface de l'appareil de transfert de données (200), l'interface parmi la pluralité d'interfaces virtuelles (104) qui est couplée via l'appareil de transfert de données (200) au routeur (300), et transmettre les données d'avertissements voisines incluant une information d'identification sur le routeur virtuel (500) auquel le routeur interne virtuel (600) appartient depuis l'interface parmi la pluralité d'interfaces virtuelles (104) ; et
déterminer, quand l'interface physique associée avec l'interface parmi la pluralité d'interfaces virtuelles (104) pour transmettre les données d'avertissement voisines est déterminée comme n'étant pas l'interface de l'appareil de transfert de données (200), l'interface parmi la pluralité d'interfaces virtuelles (104) qui est couplée à un autre routeur interne virtuel (600), et transmettre les données d'avertissement voisines incluant une information d'identification sur le routeur interne virtuel (600) depuis l'interface parmi la pluralité d'interfaces virtuelles (104).

4. Ordinateur de traitement de protocole (100) selon la revendication 2, dans lequel :
le routeur (300) est en outre configuré pour transmettre des données de notification d'information de trajet incluant une information de trajet retenue par le routeur (300) à titre de données de protocole à l'appareil de transfert de données (200) ;
l'appareil de transfert de données (200) est en outre configuré pour transférer, lorsqu'il reçoit les données de notification d'information de trajet, les données de notification d'information de trajet reçues à l'ordinateur de traitement de protocole (100) ; et
le routeur interne virtuel (600) qui fonctionne sur l'ordinateur de traitement de protocole (100) est configuré pour :
stocker, lorsqu'il reçoit les données de notification d'information de trajet depuis un routeur parmi le routeur (300) et un autre routeur interne virtuel (600), l'information de trajet incluse dans les données de notification d'information de trajet et l'information d'identification sur une source de transmission des données de notification d'information de trajet en association l'une avec l'autre ;
transmettre les données de notification d'information de trajet à une temporisation prédéterminée depuis une interface parmi la pluralité d'interfaces virtuelles (104) ;
référer, quand les données de notification d'information de trajet doivent être transmises, à la table de gestion d'interfaces virtuelles, en déterminant ainsi si l'interface physique associée avec l'interface parmi la pluralité d'interfaces virtuelles (104) pour transmettre les données de notification d'information de trajet est l'interface de l'appareil de transfert de données (200) ou non ;
déterminer, quand l'interface physique associée avec l'interface parmi la pluralité d'interfaces virtuelles (104) pour transmettre les données de notification d'information de trajet est déterminée comme étant l'interface de l'appareil de transfert de données (200), l'interface parmi la pluralité d'interfaces virtuelles (104) qui est couplée via l'appareil de transfert de données (200) au routeur (300), et transmettre, depuis l'interface parmi la pluralité d'interfaces virtuelles (104), les données de notification d'information de trajet incluant une information de trajet qui combine l'information de trajet incluse dans les données de notification d'information de trajet transmise depuis le routeur (300) et
l'information de trajet incluse dans les données de notification d'information de trajet transmise depuis un autre routeur interne virtuel (600) ; et
déterminer, quand l'interface physique associée avec l'interface parmi la pluralité d'interfaces virtuelles (104) pour transmettre les données de notification d'information de trajet est déterminée comme n'étant pas l'interface de l'appareil de transfert de données (200), l'interface parmi la pluralité d'interfaces virtuelles qui est couplée à l'autre routeur interne virtuel, et transmettre, depuis l'interface parmi la pluralité d'interfaces virtuelles (104), les données de notification d'information de trajet incluant l'information de trajet incluse dans les données de notification d'information de trajet transmise depuis le routeur (300).

5. Ordinateur de traitement de protocole (100) selon la revendication 4, dans lequel le routeur interne virtuel (600) qui fonctionne sur l'ordinateur de traitement de protocole (100) est en outre configuré pour :
transmettre l'information de trajet autre que l'information de trajet sur le couplage à un autre routeur interne virtuel (600) en utilisant un protocole de routage ; et
éviter de transmettre l'information de trajet sur le couplage à l'autre routeur interne virtuel (600) en utilisant le protocole de routage.

6. Système de communication pour coupler un premier réseau de communication incluant un appareil de transfert de données (200) en tant que composant, et un second réseau de communication incluant un routeur (300) en tant que composant l'un à l'autre,
le système de communication comprenant :
l'appareil de transfert de données (200) ;
le routeur (300) ;
une pluralité d'ordinateurs de traitement de protocole (100) selon l'une au moins des revendications 1 à 5 ; et
un ordinateur de contrôle réseau (400),
le routeur (300) étant configuré pour transmettre des données de protocole qui exigent un traitement de protocole sur la couche IP à l'appareil de transfert de données (200).

7. Procédé de communication pour des données dans un système de communication destiné à coupler un premier réseau de communication incluant un appareil de transfert de données (200) en tant que composant, et un second réseau de communication incluant un routeur (300) en tant que composant l'un à l'autre,
le système de communication ayant :
l'appareil de transfert de données (200) ;
le routeur (300) ;
une pluralité d'ordinateurs de traitement de protocole (100) ; et
un ordinateur de contrôle réseau (400),
le premier réseau de communication étant construit par un contrôle centralisé par l'ordinateur de contrôle réseau (400),
le second réseau de communication étant construit par contrôle distribué autonome en utilisant un protocole sur une couche IP par le routeur (300),
le routeur (300) étant configuré pour reconnaître le premier réseau de communication comme étant au moins un routeur virtuel (500),
chacun de la pluralité d'ordinateurs de traitement de protocole (100) comprend un routeur interne virtuel (600) qui fonctionne sur lui-même, le routeur interne virtuel (600) comprend une pluralité d'interfaces virtuelles (104),
une interface parmi une interface incluse dans chacun de la pluralité d'ordinateurs de traitement de protocole (100) et une interface incluse dans l'appareil de transfert de données (200) pour transférer les données de protocole à chacun de la pluralité d'ordinateurs de traitement de protocole (100) est associée avec chacune de la pluralité d'interfaces virtuelles (104) en tant qu'interface physique ;
le procédé de communication incluant les étapes consistant à :
transmettre, par le routeur (300), des données de protocole exigeant un traitement de protocole sur la couche IP à l'appareil de transfert de données (200) ; et étant **caractérisé par** les étapes consistant à :
transférer, par l'appareil de transfert de données (200), les données de protocole transmises depuis le routeur (300) vers l'un quelconque de la pluralité d'ordinateurs de traitement de protocole (100) ;
effectuer, par l'ordinateur parmi la pluralité d'ordinateurs de traitement de protocole (100), lorsqu'il reçoit les données de protocole, le traitement de protocole sur la couche IP pour les données de protocole reçues ; et
retenir, par l'ordinateur parmi la pluralité d'ordinateurs de traitement de protocole (100), une table de gestion d'interfaces virtuelles (103) à laquelle est enregistrée une information d'identification sur l'interface physique avec laquelle chacune de la pluralité d'interfaces virtuelles (104) est associée, en gérant ainsi l'appareil de transfert de données (200) pour transférer les données de protocole à l'ordinateur parmi la pluralité d'ordinateurs de traitement de protocole (100).
